# EUROPEAN PATENT APPLICATION

(11) **EP 4 456 295 A1**
(43) Date of publication of application: **30.10.2024**
(21) Application number: 23769811.3
(22) Date of filing: 14.03.2023
(51) Int. Cl.: H01M 50/249, H01M 50/264, H01M 50/289

(54) **BATTERY TRAY, BATTERY PACK, AND VEHICLE**

(30) Priority: 14.03.2022 CN 202220554064 U; 14.03.2022 CN 202220563577 U; 14.03.2022 CN 202220563487 U; 14.03.2022 CN 202220563578 U
(71) Applicant: BYD Company Limited, Shenzhen, Guangdong 518118 (CN)
(72) Inventor: LI, Jianqiang, Shenzhen, Guangdong 518118 (CN); TANG, Jianglong, Shenzhen, Guangdong 518118 (CN); WAN, Long, Shenzhen, Guangdong 518118 (CN); HE, Wei, Shenzhen, Guangdong 518118 (CN); LIAO, Zhengyuan, Shenzhen, Guangdong 518118 (CN)
(74) Representative: Dehns Germany Partnerschaft mbB
(86) International application number: PCT/CN2023/081454
(87) International publication number: WO 2023/174309

(57) **Abstract**

A battery tray (100), a battery pack (200), and a vehicle (2000) are provided. The battery tray (100) includes a tray bottom plate (10) and a frame (20). The tray bottom plate (10) includes a bottom plate body (11). The bottom plate body (11) defines a placing slot (111) configured to place a battery core (201). A bottom wall of the placing slot (111) is provided with a pressed area (112) configured to support the battery core (201). The bottom plate body (11) is mounted at the frame (20). The frame (20) has a support portion (22). The support portion (22) is configured to support the bottom plate body (11). An orthographic projection of the support portion (22) and an orthographic projection of the pressed area (112) have a coincident area in a height direction of the battery tray (100).

## Description

### CROSS-REFERENCE TO RELATED APPLICATIONS

The present disclosure is based on and claims priority to Chinese Patent Application Nos. 2022205540646, 2022205635773, 2022205634874, and 2022205635788, all filed on March 14, 2022. The entire content of the above-referenced applications is incorporated herein by reference.

### FIELD

The present disclosure relates to the field of batteries, and in particular, to a battery tray, a battery pack, and a vehicle.

### BACKGROUND

In related arts, a battery pack includes a battery tray. The battery tray includes a frame and a tray bottom plate. The frame and the tray bottom plate are connected by welding to form the battery tray. The tray bottom plate is configured as a plate-like structure and is configured to support a battery core. The tray bottom plate mainly bears a weight of the battery core, which results in a large thickness of the tray bottom plate, and is not conducive to a lightweight design of the battery pack and cost reduction.

### SUMMARY

The present disclosure aims to resolve at least one of technical problems existing in related arts. For this purpose, an object of the present disclosure is to propose a battery tray. A frame of the battery tray bears a most part of a weight of a battery core, and a tray bottom plate bears a small part of the weight of the battery core only, which can reduce a thickness of the tray bottom plate, and is conducive to lightweight designs of the battery tray and a battery pack and to cost reduction.

The present disclosure further proposes a battery pack.

The present disclosure further proposes a vehicle.

The battery tray according to the present disclosure includes a tray bottom plate and a frame. The tray bottom plate includes a bottom plate body. The bottom plate body defines a placing slot configured to place a battery core. A bottom wall of the placing slot has a pressed area configured to support the battery core. The bottom plate body is mounted at the frame. The frame has a support portion. The support portion is configured to support the bottom plate body. An orthographic projection of the support portion and an orthographic projection of the pressed area have a coincident area in a height direction of the battery tray.

According to the battery tray of the present disclosure, the tray bottom plate matches the frame, the frame mainly bears the most part of the weight of the battery core, and the tray bottom plate bears the small part of the weight of the battery core only, which can reduce the thickness of the tray bottom plate, and is conductive to the lightweight designs of the battery tray and the battery pack and to the cost reduction.

Additional aspects and advantages of the present disclosure will be partially given in the following description, and some will become apparent from the following description, or will be understood by the practice of the present disclosure.

### BRIEF DESCRIPTION OF THE DRAWINGS

FIG. 1 is an exploded view of a battery pack according to an embodiment of the present disclosure;
FIG. 2 is a cross-sectional view of a battery pack according to an embodiment of the present disclosure;
FIG. 3 is an enlarged view of A in FIG. 2;
FIG. 4 is a schematic diagram of assembly of a battery tray and a battery core according to an embodiment of the present disclosure;
FIG. 5 is a schematic diagram of a battery tray according to an embodiment of the present disclosure;
FIG. 6 is an exploded view of a battery tray according to an embodiment of the present disclosure;
FIG. 7 is a schematic diagram of a tray bottom plate of a battery tray according to an embodiment of the present disclosure;
FIG. 8 is a schematic diagram of a frame of a battery tray according to an embodiment of the present disclosure;
FIG. 9 is a schematic diagram of a side edge beam of a battery tray according to an embodiment of the present disclosure;
FIG. 10 is an enlarged view of B in FIG. 9;
FIG. 11 is a partially enlarged view of assembly of a battery tray and a battery core according to an embodiment of the present disclosure;
FIG. 12 is a schematic diagram of a tray bottom plate of a battery tray according to an embodiment of the present disclosure at another angle;
FIG. 13 is an enlarged view of C in FIG. 12;
FIG. 14 is a cross-sectional view of a battery tray according to an embodiment of the present disclosure;
FIG. 15 is an enlarged view of D in FIG. 14;
FIG. 16 is a schematic diagram of a battery pack according to an embodiment of the present disclosure;
FIG. 17 is a schematic diagram of a tray bottom plate according to an embodiment of the present disclosure;
FIG. 18 is another schematic diagram of the tray bottom plate shown in FIG. 17;
FIG. 19 is an enlarged view of portion E circled in FIG. 17;
FIG. 20 is still another schematic diagram of the tray bottom plate shown in FIG. 17;
FIG. 21 is an enlarged view of portion F circled in FIG. 20;
FIG. 22 is a partial schematic diagram of a tray bottom plate shown in FIG. 20;
FIG. 23 is a cross-sectional view of a battery tray according to an embodiment of the present disclosure;
FIG. 24 is an enlarged view of portion G circled in FIG. 23;
FIG. 25 is an exploded view of a battery pack according to an embodiment of the present disclosure;
FIG. 26 is a schematic diagram of assembly of the tray bottom plate and a battery shown in FIG. 25;
FIG. 27 is a schematic diagram of a frame shown in FIG. 25; and
FIG. 28 is a schematic diagram of a vehicle according to an embodiment of the present disclosure.

### DETAILED DESCRIPTION

Embodiments of the present disclosure are described in detail below, and examples of the embodiments are shown in accompanying drawings, where the same or similar numerals throughout represent the same or similar elements or elements having the same or similar functions. The embodiments described below with reference to the accompanying drawings are exemplary and are merely intended to explain the present disclosure and cannot be construed as a limitation to the present disclosure.

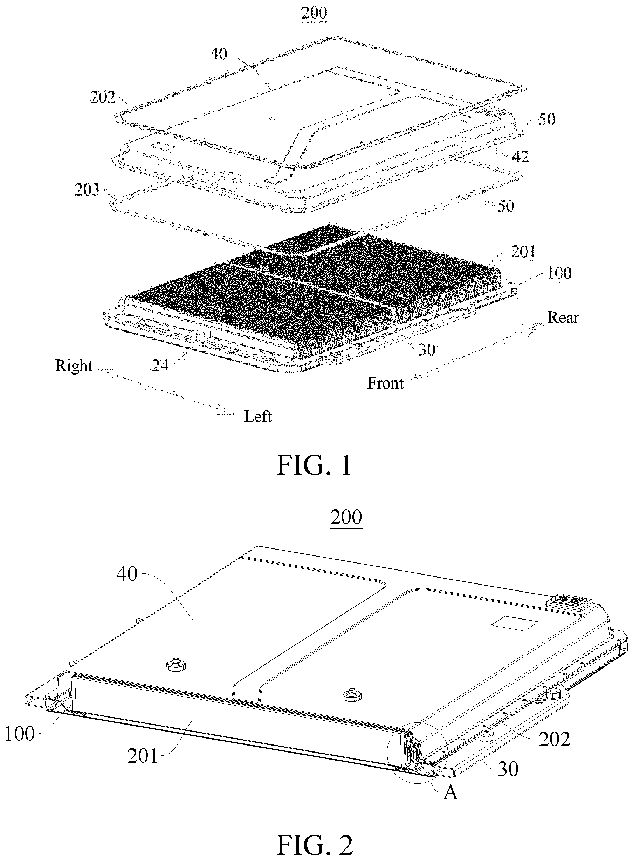

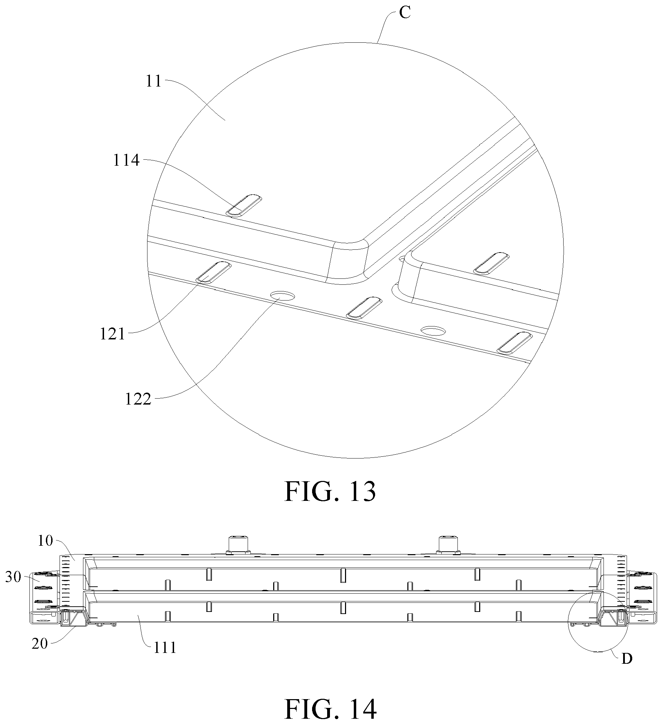

A battery tray 100 according to the embodiments of the present disclosure is described below with reference to FIG. 1 to FIG. 15. The battery tray 100 is applied to a battery pack 200.

As shown in FIG. 1 to FIG. 11, the battery tray 100 according to the embodiments of the present disclosure includes a tray bottom plate 10 and a frame 20. The tray bottom plate 10 includes a bottom plate body 11. The tray bottom plate 10 may further include an extension portion 12. The bottom plate body 11 defines a placing slot 111 for placing a battery core 201 or a battery module. The present disclosure takes the placing slot 111 configured to place the battery core 201 as an example for describing. A bottom wall 113 of the placing slot has a pressed area 112 configured to support the battery core 201. The pressed area 112 refers to an area where an orthographic projection of the bottom wall 113 of the placing slot coincides with an orthographic projection of the battery core 201 in a height direction of the battery tray 100 when the battery core 201 is mounted in the placing slot 111, or may alternatively be understood as a contact area of the battery core 201 with the bottom wall 113 of the placing slot when the battery core 201 is mounted in the placing slot 111. The contact area includes an area where the battery core 201 is in direct or indirect contact with the bottom wall 113 of the placing slot. For example: the battery core 201 is in indirect contact with the bottom wall 113 of the placing slot when there is an adhesive or a cooling structure between the battery core 201 and the bottom wall 113 of the placing slot. The battery core 201 is in direct contact with the bottom wall 113 of the placing slot when there is no other obj ect between the battery core 201 and the bottom wall 113 of the placing slot. Alternatively, it may be understood that an area where the weight of the battery core 201 directly acts on the bottom wall 113 of the placing slot is the pressed area 112. In a height direction of the battery tray 100, the orthographic projection of the bottom wall 113 of the placing slot is a projection of the bottom wall 113 of the placing slot in a plane perpendicular to the height direction of the battery tray 100. In the height direction of the battery tray 100, the orthographic projection of battery core 201 is a projection of battery core 201 in a plane perpendicular to the height direction of the battery tray 100.

When the battery core 201 is mounted in the battery tray 100, the battery core 201 is located in the pressed area 112 of the placing slot 111, and the extension portion 12 is arranged extending along a circumferential edge of the bottom plate body 11. In some optional embodiments, the extension portion 12 is configured as a ring structure. Specifically, the extension portion 12 is configured as a closed ring structure.

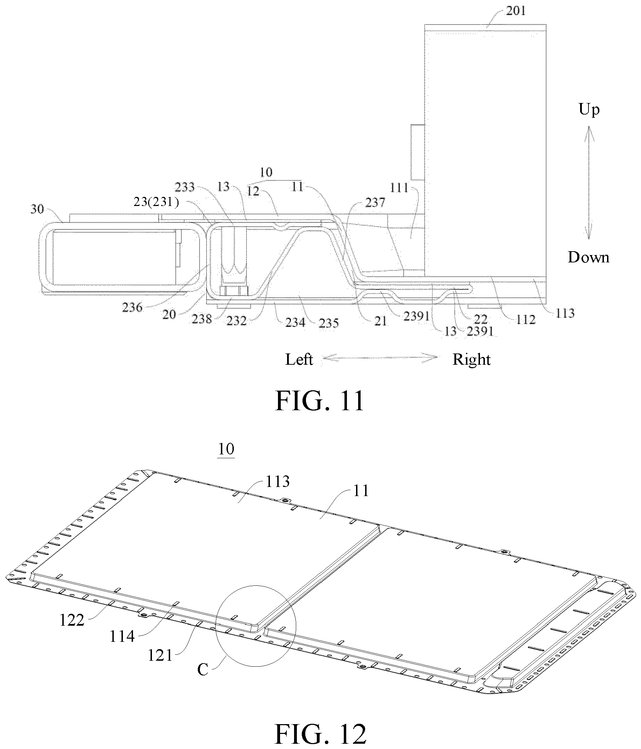

The bottom plate body 11 is mounted at the frame 20. Further, the bottom plate body 11 is fixedly mounted at the frame 20. The bottom plate body 11 may be bonded with the frame 20. The bottom plate body 11 may alternatively be mounted at the frame 20 by bolts. A specific assembling manner of the bottom plate body 11 and the frame 20 is not specifically limited and is selected according to actual needs. In some optional embodiments, the frame 20 defines a mounting space 21. The bottom plate body 11 is mounted in the mounting space 21. The extension portion 12 is located outside the mounting space 21. The extension portion 12 is located above the frame 20 and is arranged at the frame 20 in the height direction of the battery tray 100. The frame 20 has a support portion 22. The support portion 22 may extend toward an interior of the mounting space 21. The support portion 22 is configured to support the bottom plate body 11. In a height direction of the battery tray 100, when the battery tray 100 is placed in a placing manner in FIG. 11, the height direction of the battery tray 100 refers to an up-down direction of the battery tray 100. The orthographic projection of the support portion 22 and the orthographic projection of the pressed area 112 have a coincide area, which can ensure that the support portion 22 supports the battery core 201, and can ensure that the frame 20 is mainly configured to bear the weight of the battery core 201 after the battery core 201 is placed in the placing slot 111. It may be understood that the height direction of the battery tray 100 may coincide with the height direction of a vehicle 2000 when the battery tray 100 is mounted on the vehicle 2000.

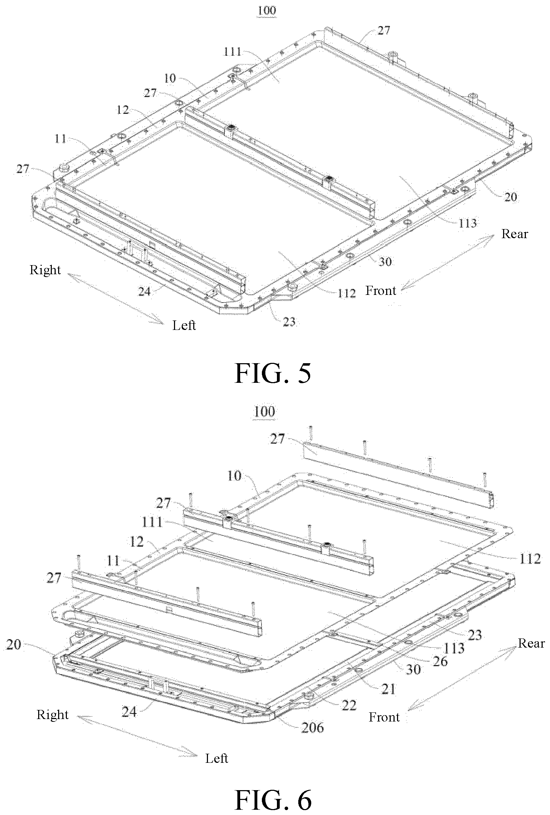

As shown in FIG. 6, FIG. 8, and FIG. 11, the present disclosure takes the battery tray 100 placed along an up-down direction as an example for describing. The extension portion 12 is arranged outside the mounting space 21 after the bottom plate body 11 is mounted in the mounting space 21. The extension portion 12 is arranged corresponding to the frame 20 in the up-down direction of the battery tray 100. Specifically, as shown in FIG. 11, the extension portion 12 is located above the frame 20. The extension portion 12 is arranged directly opposite to the frame 20. The extension portion 12 may shield an entire upper surface of the frame 20 in the up-down direction of the battery tray 100.

As shown in FIG. 11, the battery core 201 is located in the pressed area 112 when the battery core 201 is mounted in the placing slot 111, the support portion 22 supports the pressed area 112, the battery core 201 is born on the frame 20, the frame 20 bears a most part of the weight of the battery core 201, and the tray bottom plate 10 does not bear the weight of the battery core 201 or bears a small part of the weight of the battery core 201 only, so that a load bearing requirement of the tray bottom plate 10 can be greatly reduced, and the tray bottom plate 10 may be made of a material with a lower strength and a thinner thickness. In some optional embodiments, the tray bottom plate 10 is provided as an insulating component. In some optional embodiments, the tray bottom plate 10 is provided as a non-metal component, that is, the tray bottom plate 10 may be made of a lightweight insulating composite material. For example: the lightweight insulating composite material may be made of resin and glass fiber. The resin may be epoxy resin or polyurethane, but the present disclosure is not limited thereto. The lightweight composite material may alternatively be made of other composite materials having the same functions as the resin and the glass fiber. Such an arrangement can reduce the weight of the tray bottom plate 10, and is conductive to lightweight designs of the battery tray 100 and the battery pack 200. Moreover, a conventional tray bottom plate 10 is made of an aluminum material. According to the present disclosure, the tray bottom plate 10 is made of the insulating composite material, which can reduce production cost of the tray bottom plate 10, and is conductive to reducing production cost of the battery tray 100 and the battery pack 200. It is to be noted that, the tray bottom plate 10 made of a non-metal material has excellent electrical insulation properties. The battery pack 200 does not suffer from high voltage risks such as arc discharge when the vehicle 2000 is subjected to a serious chassis collision accident.

In some optional embodiments, the tray bottom plate 10 is configured as an integrally formed component. The tray bottom plate 10 is molded by a lightweight insulating composite material. The tray bottom plate 10 achieves good air tightness after melting, flowing, and curing of resin during molding. Molding by a mold component can ensure that the tray bottom plate 10 has good flatness and dimensional accuracy, and ensure a sealing function of the tray bottom plate 10. The frame 20 may be formed by metal through butt-welding, only a strength of a welding structure and necessary flatness of a product need to be ensured after welding forming, butt-welding efficiency is high, and production efficiency of the battery tray 100 is improved. Moreover, the tray bottom plate 10 does not need to be subjected to welding seam grinding and air tightness testing, and there is no risk of sealing failure caused by welding. The tray bottom plate 10 may be molded by a composite material. Production efficiency of the tray bottom plate 10 is high, and mold accuracy is high, so that high flatness can be achieved, and a dimension requirement of the battery core 201 is reduced.

In addition, a conventional battery tray 100 does not distinguish two functions of load bearing and sealing in a product structure. Requirements on both load bearing and sealing of a whole body are taken into consideration when the battery tray 100 is manufactured, resulting in low manufacturing efficiency and low yield of the battery tray 100. While in the present disclosure, the two functions of load bearing and sealing are distinguished. The frame 20 is mainly responsible for load bearing, and the tray bottom plate 10 is mainly responsible for sealing of the battery tray 100, which improves the manufacturing efficiency and the yield of the battery tray 100.

Thus, by matching the tray bottom plate 10 and the frame 20, the frame 20 bears a most part of the weight of the battery core 201, the tray bottom plate 10 basically does not bear the weight of the battery core 201 or bears a small part of the weight of the battery core 201 only, and the tray bottom plate 10 is mainly responsible for sealing, so that a thickness of the tray bottom plate 10 can be reduced, and the tray bottom plate 10 may be made of a lightweight composite material, which is conductive to lightweight designs of the battery tray 100 and the battery pack 200, and to cost reduction. Moreover, there is no risk of sealing failure of the battery tray 100 caused by welding after the tray bottom plate 10 and the frame 20 are assembled together. Welding seam grinding and air tightness testing of the battery tray 100 do not need to be performed, so that the production efficiency of the battery tray 100 is improved.

In some embodiments of the present disclosure, the bottom wall 113 of the placing slot has the pressed area 112, which may alternatively be understood that the pressed area 112 is arranged on the bottom wall 113 of the placing slot, as shown in FIG. 11, when the battery tray 100 is placed in a manner in FIG. 11, the support portion 22 is located below the bottom plate body 11, and the support portion 22 supports the bottom wall 113 of the placing slot. Such an arrangement can ensure that the support portion 22 supports below the pressed area 112, can further ensure that the support portion 22 supports the battery core 201, and can further ensure that the frame 20 is configured to bear the most part of the weight of the battery core 201. Thus, the pressed area 112 is provided at a proper position.

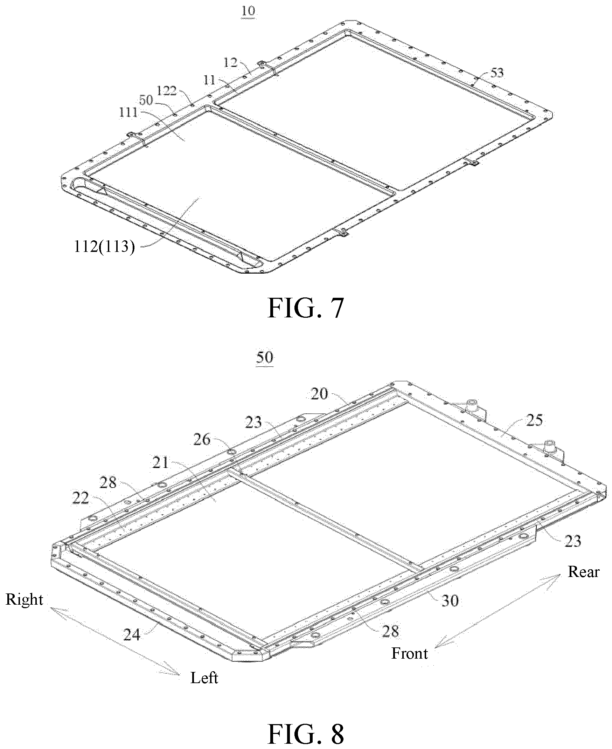

In some embodiments of the present disclosure, as shown in FIG. 6 and FIG. 8, the frame 20 includes a first edge beam, a second edge beam, a third edge beam, and a fourth edge beam. The first edge beam and the second edge beam are oppositely arranged along a first direction. The third edge beam and the fourth edge beam are oppositely arranged along a second direction. It is to be noted that, the first edge beam and the second edge beam may be configured as side edge beams 23 of the frame 20. The first edge beam is one side edge beam 23, and the second edge beam is the other side edge beam 23. The third edge beam is configured as one of a front end beam 24 and a rear end beam 25 of the frame 20. The fourth edge beam is configured as the other of the front end beam 24 and the rear end beam 25. The first edge beam and the second edge beam are spaced away in a left-right direction in FIG. 8 when the frame 20 is placed in a manner in FIG. 8. Both the front end beam 24 and the rear end beam 25 are connected between the two side edge beams 23. The first edge beam, the second edge beam, the third edge beam, and the fourth edge beam are connected to form the mounting space 21. The first edge beam, the second edge beam, the third edge beam, and the fourth edge beam may be directly or indirectly connected. For example: taking a connection between the first edge beam and the third edge beam as an example for describing, the first edge beam and the third edge beam may be directly connected, or the first edge beam and the third edge beam may be indirectly connected through other beams. One of the first direction and the second direction is a length direction of the battery tray 100, and the other of the first direction and the second direction is a width direction of the battery tray 100. It may be understood that, when the battery tray 100 is mounted on the vehicle 2000, the width direction of the battery tray 100 may coincide with the width direction of the vehicle 2000, and the length direction of the battery tray 100 may coincide with the length direction of the vehicle 2000. Certainly, the width direction of the battery tray 100 may alternatively coincide with the length direction of the vehicle 2000, and the length direction of the battery tray 100 may coincide with the width direction of the vehicle 2000.

As shown in FIG. 6, when the battery tray 100 is placed in a direction in FIG. 6, the first direction may refer to a left-right direction in FIG. 6, and the second direction may refer to a front-rear direction in FIG. 6. Certainly, the first direction may refer to the front-rear direction in FIG. 6, and the second direction may refer to the left-right direction in FIG. 6. The present disclosure takes the left-right direction in FIG. 6 as the first direction and the front-rear direction in FIG. 6 as the second direction as an example for describing. The first edge beam and/or the second edge beam has a support portion 22. For example: both the first edge beam and the second edge beam are provided with support portions 22. When the battery core 201 is placed in a manner of extending along the left-right direction in FIG. 8, the support portions 22 are arranged on the first edge beam and/or the second edge beam, which can ensure that each battery core 201 can be supported by the support portion 22, can further ensure that the support portion 22 supports the battery core 201, can ensure that the frame 20 is configured to bear the most part of the weight of the battery core 201. Thus, the support portion 22 is arranged at a proper position.

In some embodiments of the present disclosure, as shown in FIG. 8, the frame 20 further includes a support beam 26. The support beam 26 is connected between the first edge beam and the second edge beam, or the support beam 26 is connected between the front end beam 24 and the rear end beam 25, or the support beam 26 is connected between the front end beam 24 and the side edge beam 23, or the support beam 26 is connected between the rear end beam 25 and the side edge beam 23. Such an arrangement can improve a structural strength of the frame 20, thereby improving a structural strength of the battery tray 100.

In some embodiments of the present disclosure, as shown in FIG. 5 and FIG. 6, the battery tray 100 further includes an expansion beam 27. The expansion beam 27 is arranged on a side of the tray bottom plate 10 away from the frame 20. When the battery tray 100 is arranged in a manner in FIG. 5 and FIG. 6, the expansion beam 27 is arranged above the tray bottom plate 10, and the expansion beam 27 is mounted on the support beam 26 by bolts. The expansion beam 27 may limit the battery core 201 after the battery core 201 is mounted in the placing slot 111 and when the battery core 201 expands, thereby improving use safety of the battery core 201.

In some optional embodiments, multiple support beams 26 are arranged. The multiple support beams 26 are sequentially arranged at intervals along the length direction of the side edge beam 23. The length direction of the side edge beam 23 refers to the front-rear direction in FIG. 6. Multiple expansion beams 27 are arranged. The multiple expansion beams 27 are sequentially arranged at intervals along the length direction of the side edge beam 23. The multiple expansion beams 27 are arranged in one-to-one correspondence with the multiple support beams 26. One expansion beam 27 is mounted on one support beam 26 by bolts, thereby stably mounting the expansion beam 27 on the frame 20.

In some embodiments of the present disclosure, as shown in FIG. 11, the support portion 22 of the first edge beam is arranged close to a lower end of the first edge beam, and/or the support portion 22 of the second edge beam is arranged close to a lower end of the second edge beam. For example: the support portion 22 of the first edge beam is arranged close to the lower end of the first edge beam, and the support portion 22 of the second edge beam is arranged close to the lower end of the second edge beam. It may alternatively be understood that the support portion 22 is arranged close to a lower end of the side edge beam 23 corresponding to the support portion 22. It may alternatively be understood that the support portion 22 is arranged close to an end portion of the side edge beam 23 corresponding to the support portion 22 away from the tray bottom plate 10. After the bottom plate body 11 is mounted in the mounting space 21, the support portion 22 is arranged close to the end portion of the side edge beam 23 away from the tray bottom plate 10, which can ensure that the support portion 22 supports below the bottom plate body 11, and can ensure that the bottom plate body 11 may be mounted in the mounting space 21.

In some embodiments of the present disclosure, as shown in FIG. 5 to FIG. 7 and FIG. 11, when the battery tray 100 is placed in a manner in FIG. 11, the upper end of the placing slot 111 is open, and the battery core 201 may be placed in the placing slot 111 from an open end of the placing slot 111. Moreover, the extension portion 12 is arranged extending along a circumferential direction of the open end of the placing slot 111. As shown in FIG. 11, the extension portion 12 is connected to the upper end of the bottom plate body 11. The extension portion 12 can be arranged outside the placing slot 111 through such an arrangement after the bottom plate body 11 is mounted in the mounting space 21, which can ensure that the extension portion 12 is arranged corresponding to the frame 20 in the up-down direction of the battery tray 100, thereby ensuring sealing of the battery tray 100.

In some embodiments of the present disclosure, as shown in FIG. 8, FIG. 10, and FIG. 11, a surface of the support portion 22 close to the tray bottom plate 10 is configured as a plane, that is, as shown in FIG. 11, an upper surface of the support portion 22 is configured as a plane. Such an arrangement can ensure support area of the support portion 22 to the bottom plate body 11, so that the support portion 22 can better support the battery core 201.

In some embodiments of the present disclosure, the support portion 22 is located below the bottom plate body 11 and is fixedly connected to the bottom plate body 11. In some optional embodiments, the tray bottom plate 10 is bonded with the frame 20. Further, the support portion 22 is bonded with the bottom plate body 11 by applying an adhesive (for example, a structural adhesive) between the tray bottom plate 10 and the frame 20. A dimensional tolerance of the frame 20 is absorbed by controlling a thickness of the adhesive, the tray bottom plate 10 has good flatness, and manufacturing requirements for the tray bottom plate 10 and the frame 20 are reduced by using a characteristic that the adhesive can absorb a tolerance. Moreover, when the conventional tray bottom plate 10 and the frame 20 are welded, the tray bottom plate 10 is easily deformed in a welding process, which increases a dimension requirement for the battery core 201 in a subsequent assembly process of the battery pack 200, and affects assembly efficiency of the battery pack 200. Whereas in the present disclosure, the tray bottom plate 10 is bonded with the frame 20, and the tray bottom plate 10 is prevented from being connected to the frame 20 by welding, which can prevent the tray bottom plate 10 form deforming, reduces the dimension requirement for the battery core 201 in the subsequent assembly process of the battery pack 200, and improves the assembly efficiency of the battery pack 200.

In some embodiments of the present disclosure, the frame 20 is configured as a metal component, the frame 20 may be made of an aluminum material, or the frame 20 may be made of a steel material, but the present disclosure is not limited thereto. The frame 20 may alternatively be made of other metal materials that achieve the same effect as the steel material. For example: the frame 20 is made of a steel material, the frame 20 may be formed by rolling a steel material, or the frame 20 may be formed by extruding a steel material. The frame 20 is configured as a metal component, which can improve the load bearing capability of the frame 20.

In some embodiments of the present disclosure, as shown in FIG. 11, at least one of the first edge beam or the second edge beam includes an edge beam body 231 connected to the corresponding support portion 22. For example: the first edge beam includes an edge beam body 231 connected to the support portion 22 corresponding to the first edge beam. The second edge beam includes an edge beam body 231 connected to the support portion 22 corresponding to the second edge beam. The edge beam bodies 231 define a cavity. A connecting plate 232 is arranged in the cavity. The connecting plate 232 is obliquely connected between a top wall 233 of the cavity and a bottom wall 234 of the cavity. The connecting plate 232 may divide the cavity into multiple sub-cavities 235. The multiple sub-cavities 235 are sequentially arranged in a width direction of the side edge beam 23. The width direction of the side edge beam 23 refers to a left-right direction in FIG. 11 when the battery tray 100 is placed in a manner in FIG. 11. In some optional embodiments, as shown in FIG. 11, the connecting plate 232 extends obliquely in a direction away from the mounting space 21 in a direction from a top to a bottom of the battery tray 100. The connecting plate 232 divides the cavity into two sub-cavities 235. The two sub-cavities 235 are sequentially arranged in the width direction of the side edge beam 23. Such an arrangement can improve the structural strength of the side edge beam 23, and can improve the stability of the side edge beam 23, thereby improving a capability of the side edge beam 23 to support the battery core 201. In some embodiments, the width direction of the side edge beam 23 may coincide with the width direction of the battery tray 100 or the width direction of the vehicle 2000. In some other embodiments, the width direction of the side edge beam 23 may coincide with the length direction of the battery tray 100 or the length direction of the vehicle 2000.

Moreover, the multiple sub-cavities 235 are sequentially arranged in the width direction of the side edge beam 23. When the sub-cavity 235, of the multiple sub-cavities 235, away from the mounting space 21 of the battery tray 100 is impacted, for example: when the sub-cavity 235 located on a left side of FIG. 11 is impacted, the impacted sub-cavity 235 can absorb a collision force, which reduces the collision force transferred to an interior of the battery pack 200, and can reduce a risk of damage to the battery core 201 in the battery pack 200, thereby improving the use safety of the battery pack 200.

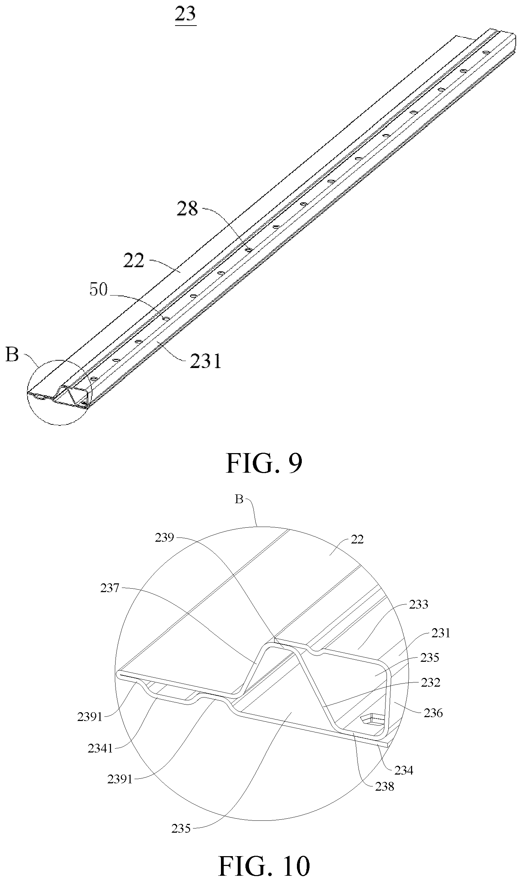

In some optional embodiments, as shown in FIG. 10 and FIG. 11, a first side wall 236 of the cavity away from the mounting space 21 is connected between the top wall 233 of the cavity and the bottom wall 234 of the cavity, and the first side wall 236 is connected to the connecting plate 232. In some optional embodiments, as shown in FIG. 11, a lower end of the first side wall 236 is connected to a first connecting portion 238 extending toward an interior of the cavity. The first side wall 236 is connected to the bottom wall 234 of the cavity and the connecting plate 232 through the first connecting portion 238. The first connecting portion 238 is fixedly connected to the bottom wall 234 of the cavity. For example, the first connecting portion 238 is connected to the bottom wall 234 of the cavity by welding. Such an arrangement can further improve the structural strength of the side edge beam 23, and can further improve the stability of the side edge beam 23.

In some optional embodiments, as shown in FIG. 10 and FIG. 11, a second side wall 237 of the cavity close to the mounting space 21 is connected between the top wall 233 of the cavity and the bottom wall 234 of the cavity, and the second side wall 237 is connected to the connecting plate 232. In some optional embodiments, as shown in FIG. 11, an upper end of the second side wall 237 is connected to a second connecting portion 239 extending toward the interior of the cavity. The second side wall 237 is connected to the top wall 233 of the cavity and the connecting plate 232 through the second connecting portion 239. The second connecting portion 239 is fixedly connected to the top wall 233 of the cavity. For example, the second connecting portion 239 is connected to the top wall 233 of the cavity by welding. The top wall 233 of the cavity, the bottom wall 234 of the cavity, the first side wall 236, and the second side wall 237 together define the cavity. Such an arrangement can further improve the structural strength of the side edge beam 23, and can further improve the stability of the side edge beam 23.

In some optional embodiments, as shown in FIG. 10 and FIG. 11, the lower end of the second side wall 237 is connected to the support portion 22, and the second side wall 237 is connected to the bottom wall 234 of the cavity through the support portion 22. Further, in the width direction of the side edge beam 23, an end of the bottom wall 234 of the cavity close to the mounting space 21 extends below the support portion 22, and an end portion of the bottom wall 234 of the cavity close to the mounting space 21 is connected to an end portion of the support portion 22 close to the mounting space 21. In some optional embodiments, a boss structure 2391 protruding toward the support portion 22 is arranged at a structure of the bottom wall 234 of the cavity located below the support portion 22. The boss structure 2391 is connected to the support portion 22. Such an arrangement can further improve the structural strength of the side edge beam 23, and can further improve the stability of the side edge beam 23.

In some optional embodiments, multiple boss structures 2391 are arranged at a structure of the bottom wall 234 of the cavity located below the support portion 22. The multiple boss structures 2391 are sequentially arranged in the width direction of the side edge beam 23. At least one of the multiple boss structures 2391 is located below the pressed area 112. By such an arrangement, the boss structure 2391 can support the battery core 201, and the load bearing capacity of the frame 20 can be further improved.

In some embodiments of the present disclosure, as shown in FIG. 5 and FIG. 6, the frame 20 is connected to a lifting lug structure 30. The lifting lug structure 30 has a mounting hole. The lifting lug structure 30 is mounted on the vehicle 2000 by fasteners (for examples, bolts) to achieve a purpose of mounting the battery pack 200 on the vehicle 2000.

As shown in FIG. 1 to FIG. 15, the battery tray 100 according to the embodiments of the present disclosure includes: a sealing structure 13, a tray bottom plate 10, and a frame 20. The tray bottom plate 10 includes a bottom plate body 11 and an extension portion 12. The bottom plate body 11 defines a placing slot 111 for placing a battery core 201 or a battery module. The present disclosure takes the placing slot 111 for placing the battery core 201 as an example for describing. The battery core 201 may be bonded with an interior of the placing slot 111 through a structural adhesive. A bottom wall 113 of the placing slot has a pressed area 112 supporting the battery core 201. The pressed area 112 refers to an area where an orthographic projection of the bottom wall 113 of the placing slot coincides with an orthographic projection of the battery core 201 in a height direction of the battery tray 100 when the battery core 201 is mounted in the placing slot 111, or may alternatively be understood as a contact area of the battery core 201 with the bottom wall 113 of the placing slot when the battery core 201 is mounted in the placing slot 111. The contact area includes an area where the battery core 201 is in direct or indirect contact with the bottom wall 113 of the placing slot. For example: the battery core 201 is in indirect contact with the bottom wall 113 of the placing slot when there is an adhesive or a cooling structure between the battery core 201 and the bottom wall 113 of the placing slot. The battery core 201 is in direct contact with the bottom wall 113 of the placing slot when there is no other object between the battery core 201 and the bottom wall 113 of the placing slot. Alternatively, it may be understood that an area where the weight of the battery core 201 directly acts on the bottom wall 113 of the placing slot is the pressed area 112. In a height direction of the battery tray 100, the orthographic projection of the bottom wall 113 of the placing slot is a projection of the bottom wall 113 of the placing slot in a plane perpendicular to the height direction of the battery tray 100. In the height direction of the battery tray 100, the orthographic projection of battery core 201 is a projection of battery core 201 in a plane perpendicular to the height direction of the battery tray 100.

When the battery core 201 is mounted in the battery tray 100, the battery core 201 is located in the pressed area 112 of the placing slot 111, and the extension portion 12 is arranged extending along a circumferential edge of the bottom plate body 11. Further, the extension portion 12 is configured as a ring structure. Specifically, the extension portion 12 is configured as a closed ring structure. Further, the extension portion 12 is provided with an avoidance through hole 122 for a fastener (for example, a bolt or a screw) to pass through.

The frame 20 defines a mounting space 21. The bottom plate body 11 is mounted in the mounting space 21. The extension portion 12 is located outside the mounting space 21 and is arranged at the frame 20. Further, the extension portion 12 is arranged at the frame 20 by a fastener. As shown in FIG. 6, FIG. 8, and FIG. 11, the present disclosure takes the battery tray 100 placed along an up-down direction as an example for describing. The extension portion 12 is arranged outside the mounting space 21 after the bottom plate body 11 is mounted in the mounting space 21. The extension portion 12 is arranged corresponding to the frame 20 in the up-down direction of the battery tray 100. Specifically, as shown in FIG. 11, the extension portion 12 is located above the frame 20. The extension portion 12 is arranged directly opposite to the frame 20. The extension portion 12 may shield an entire upper surface of the frame 20 in the up-down direction of the battery tray 100. The sealing structure 13 is configured to seal the avoidance through hole 122.

The frame 20 is provided with bolt holes 28. Multiple bolt holes 28 are included. The multiple bolt holes 28 are arranged in one-to-one correspondence with the multiple avoidance through holes 122. Multiple rivet nuts are pre-embedded in the frame 20. The multiple rivet nuts are arranged in one-to-one correspondence with the multiple bolt holes 28. The rivet nuts pass through the avoidance through holes 122 and the bolt holes 28. The battery pack 200 includes a cover body 40. The cover body 40 and the tray bottom plate 10 together define a placing cavity 41 for placing the battery core 201, and the cover body 40 is connected to the frame 20. Further, the cover body 40 is arranged covering an open end of the placing slot 111 to define the placing cavity 41. The extension portion 12 is sandwiched between the cover body 40 and the frame 20, so that the bolts pass through the avoidance through holes 122 of the cover body 40 and the extension portion 12 and the bolt holes 28 of the frame 20 are connected to the rivet nuts, thereby assembling the cover body 40, the tray bottom plate 10, and the frame 20. The bolt passes through the avoidance through hole 122 and the sealing structure 13 seals the avoidance through hole 122, which can improve the air tightness of the battery tray 100, can prevent a liquid from flowing into the placing slot 111 through the avoidance through hole 122, and prevent the battery pack 200 from being short-circuited, thereby improving the use safety of the battery pack 200. Moreover, the battery core 201 is spaced from the frame 20 through the tray bottom plate 10, which can ensure that the liquid cannot flow into the placing slot 111 even if the frame 20 is unsealed, reduces a sealing requirement for the frame 20, reduces a sealing requirement for the frame 20, reduces manufacturing difficulty of the frame, and improves production efficiency of the frame 20.

In some optional embodiments, the tray bottom plate 10 is configured as an integrally formed component. Such an arrangement can ensure the air tightness of the tray bottom plate 10, and can prevent a liquid from flowing into the placing slot 111 from the tray bottom plate 10, thereby further improving the use safety of the battery pack 200.

In some embodiments of the present disclosure, the sealing structure 13 is arranged between the extension portion 12 and the frame 20, and the sealing structure 13 is arranged corresponding to the avoidance through hole 122. The sealing structure 13 may be in contact with the bolt passing through the cover body 40, the avoidance through hole 122 of the extension portion 12, and the bolt hole 28 of the frame 20 to shield the avoidance through hole 122, thereby sealing the avoidance through hole 122. And/or the sealing structure 13 is arranged in the avoidance through hole 122 to seal the avoidance through hole 122. The sealing structure 13 may tightly fit a fastener, and the sealing structure 13 is arranged covering the avoidance through hole 122 when the sealing structure 13 is arranged between the extension portion 12 and the frame 20 and after the fastener passes through the avoidance through hole 122, thereby sealing the avoidance through hole 122. The sealing structure 13 is sandwiched between the avoidance through hole 122 and the fastener when the sealing structure 13 is arranged in the avoidance through hole 122, so that a gap between the avoidance through hole 122 and the fastener is sealed, thereby sealing the avoidance through hole 122. For example: the sealing structure 13 is arranged between the extension portion 12 and the frame 20 and in the avoidance through hole 122.

In some embodiments of the present disclosure, as shown in FIG. 11, the extension portion 12 is hermetically connected to the frame 20 through the sealing structure 13. Further, the sealing structure 13 is configured as a sealant, or the sealing structure 13 may be configured as a rubber part, but the present disclosure is not limited thereto. The sealing structure 13 may alternatively be configured as a sealing member that achieves the same effect as the sealant. The sealing structure 13 may be sandwiched in an entire space between the tray bottom plate 10 and the frame 20. The sealing structure 13 may be sandwiched in a partial space between the extension portion 12 and the frame 20. The sealing structure 13 may be arranged around the bolt hole 28 and the avoidance through hole 122. Further, the sealing structure 13 may extend into the bolt hole 28 and the avoidance through hole 122. By such an arrangement, a sealing connection between the extension portion 12 and the frame 20 can be achieved, and a liquid may be effectively prevented from flowing into the placing cavity 41 from the bolt hole 28 in the frame 20.

Further, multiple sealing structures 13 are included. The multiple sealing structures 13 are sequentially arranged at intervals. It may be understood that, the multiple sealing structures 13 are sequentially arranged at intervals between the tray bottom plate 10 and the frame 20. By arranging the multiple sealing structures 13 between the tray bottom plate 10 and the frame 20 at the same time, the air tightness of the battery tray 100 can be further improved, the liquid can be further prevented from flowing into the placing cavity 41 from the bolt hole 28 in the frame 20, and the battery pack 200 can be further prevented from being short-circuited, thereby further improving the use safety of the battery pack 200.

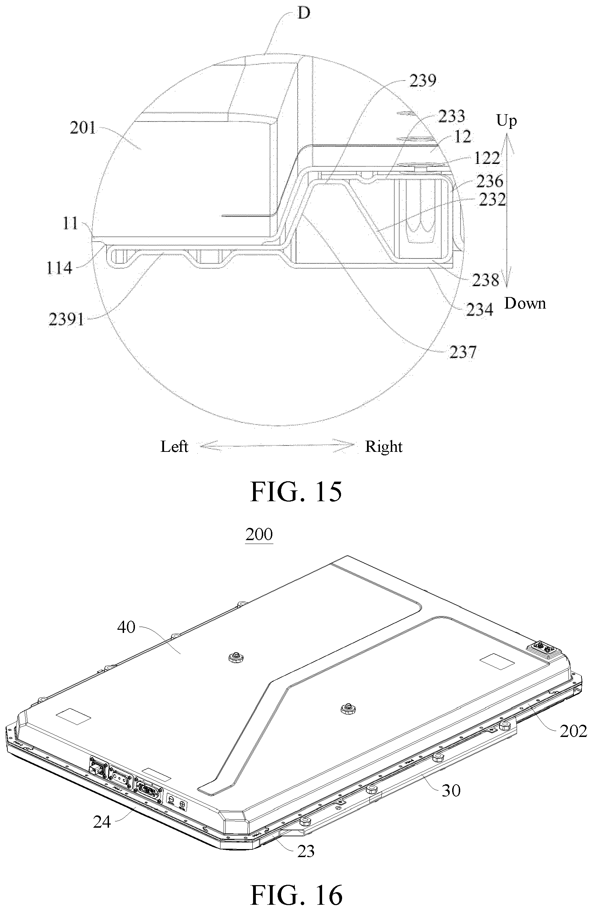

In some embodiments of the present disclosure, as shown in FIG. 11 and FIG. 15, the frame 20 has a support portion 22 extending toward an interior of the mounting space 21. The support portion 22 is configured to support the bottom plate body 11. Further, the support portion 22 is configured to support the pressed area 112. The sealing structure 13 is arranged between the support portion 22 and the bottom plate body 11. By such an arrangement, a gap between the support portion 22 and the bottom plate body 11 may be sealed, the liquid may be prevented from entering between the tray bottom plate 10 and the frame 20 from the gap between the support portion 22 and the bottom plate body 11.

As shown in FIG. 11, the battery core 201 is located in the pressed area 112 when the battery core 201 is mounted in the placing slot 111, the support portion 22 supports the pressed area 112, a weight of the battery core 201 is born on the frame 20, the frame 20 bears a most part of the weight of the battery core 201, and the tray bottom plate 10 bears a small part of the weight of the battery core 201, so that a load bearing requirement of the tray bottom plate 10 can be greatly reduced, and the tray bottom plate 10 may be made of a material with a lower strength and a thinner thickness. Further, the tray bottom plate 10 is provided as a non-metal component. Further, the tray bottom plate 10 is provided as an insulating component. The tray bottom plate 10 may be made of a lightweight non-metal composite material. For example: the lightweight non-metal composite material may be made of resin and glass fiber. The resin may be epoxy resin or polyurethane, but the present disclosure is not limited thereto. The lightweight composite material may alternatively be made of other composite materials having the same functions as the resin and the glass fiber. Such an arrangement can reduce the weight of the tray bottom plate 10, is conductive to lightweight designs of the battery tray 100 and the battery pack 200, and can also ensure the integrity of the battery pack 200 in case of thermal runaway or external fire of the battery core 201. Moreover, the conventional tray bottom plate 10 is made of an aluminum material. According to the present disclosure, the tray bottom plate 10 is made of a composite material, which can reduce production cost of the tray bottom plate 10, and is conductive to reducing production cost of the battery tray 100 and the battery pack 200. It is to be noted that, the tray bottom plate 10 made of the non-metal composite material has excellent electrical insulation properties. The battery pack 200 does not suffer from high voltage risks such as arc discharge when the vehicle 2000 is subjected to a serious chassis collision accident.

Further, the tray bottom plate 10 is molded by a lightweight non-metal composite material. The tray bottom plate 10 achieves good air tightness after melting, flowing, and curing of resin during molding. Molding by a mold component can ensure that the tray bottom plate 10 has good flatness and dimensional accuracy, and ensure a sealing function of the tray bottom plate 10. The frame 20 may be formed by metal through butt-welding, only a strength of a welding structure and necessary flatness of a product need to be ensured after welding forming, butt-welding efficiency is high, and production efficiency of the battery tray 100 is improved, the tray bottom plate 10 is responsible for sealing and does not need to be subjected to welding seam grinding and air tightness testing, and there is no risk of sealing failure caused by welding. The tray bottom plate 10 may be molded by a composite material. Production efficiency of the tray bottom plate 10 is high, and mold accuracy is high, so that high flatness can be achieved, and a dimension requirement of the battery core 201 is reduced.

In addition, a conventional battery tray 100 does not distinguish two functions of load bearing and sealing in a product structure. Requirements on both load bearing and sealing of a whole body are taken into consideration when the battery tray 100 is manufactured, resulting in low manufacturing efficiency and low yield of the battery tray 100. While in the present disclosure, the two functions of load bearing and sealing are distinguished. The frame 20 is mainly responsible for load bearing, and the tray bottom plate 10 is mainly responsible for sealing of the battery tray 100, which improves the manufacturing efficiency and the yield of the battery tray 100.

Thus, by matching the tray bottom plate 10 and the frame 20, the frame 20 bears a most part of the weight of the battery core 201, the tray bottom plate 10 bears a small part of the weight of the battery core 201 only, and the tray bottom plate 10 is mainly responsible for sealing, so that the tray bottom plate 10 may be made of a lightweight composite material, which is conductive to lightweight designs of the battery tray 100 and the battery pack 200 and to cost reduction. Moreover, there is no risk of sealing failure of the battery tray 100 caused by welding after the tray bottom plate 10 and the frame 20 are assembled together. Welding seam grinding and air tightness testing of the battery tray 100 do not need to be performed, so that the production efficiency of the battery tray 100 is improved.

In some embodiments of the present disclosure, as shown in FIG. 6 and FIG. 8, the frame 20 includes side edge beams 23, a front end beam 24, and a rear end beam 25. The side edge beams 23, the front end beam 24, and the rear end beam 25 are connected to form the mounting space 21. The side edge beams 23, the front end beam 24, and the rear end beam 25 may be directly connected or indirectly connected. For example: taking a connection between the side edge beam 23 and the front end beam 24 as an example for describing, the side edge beam 23 and the front end beam 24 may be directly connected, or the side edge beam 23 and the front end beam 24 may be indirectly connected through other beams. The side edge beam 23 and/or the front end beam 24 and/or the rear end beam 25 is provided with a support portion 22, that is, at least one of the side edge beam 23, the front end beam 24, or the rear end beam 25 is provided with a support portion 22. The present disclosure takes the side edge beam 23 provided with the support portion 22 as an example for describing. The quantity of the side edge beams 23 may be set as two, and the quantities of both the rear end beam 25 and the front end beam 24 may be set as one. The two side edge beams 23 are spaced away in the left-right direction in FIG. 8 when the frame 20 is placed in a placing manner in FIG. 8, and both the front end beam 24 and the rear end beam 25 are connected between the two side edge beams 23. The front end beam 24 and the rear end beam 25 are spaced away in the front-rear direction of the frame 20, so that the front end beam 24, the rear end beam 25, and the two side edge beams 23 together define the mounting space 21. Moreover, when the battery core 201 is placed in a manner of extending along the left-right direction in FIG. 8, the support portion 22 is arranged at the side edge beam 23, which can ensure that each battery core 201 is supported by the support portion 22, can further ensure that the support portion 22 supports the battery core 201, and can further ensure that the frame 20 is mainly configured to bear the weight of the battery core 201. Thus, the support portion 22 is arranged at a proper position.

It may be understood that the width direction of the battery tray 100 may coincide with a width direction of a vehicle, and the length direction of the battery tray 100 may coincide with a length direction of the vehicle when the battery tray 100 is mounted on the vehicle 2000. Certainly, the width direction of the battery tray 100 may coincide with the length direction of the vehicle, and the length direction of the battery tray 100 may coincide with the width direction of the vehicle.

In some embodiments of the present disclosure, as shown in FIG. 11, the support portion 22 is arranged close to the lower end of the side edge beam 23. It may alternatively be understood that the support portion 22 is arranged close to an end portion of the side edge beam 23 away from the tray bottom plate 10. After the bottom plate body 11 is mounted in the mounting space 21, the support portion 22 is arranged close to the end portion of the side edge beam 23 away from the tray bottom plate 10, which can ensure that the support portion 22 supports below the bottom plate body 11, and can ensure that the bottom plate body 11 is mounted in the mounting space 21.

In some embodiments of the present disclosure, the sealing structure 13 is configured as a plate-shaped structure. By such an arrangement, the surface flatness of the sealing structure 13 can be improved, the sealing structure 13 may tightly fit the tray bottom plate 10, and the sealing structure 13, and the frame 20, thereby ensuring the air tightness between the tray bottom plate 10 and the frame 20.

In some embodiments of the present disclosure, as shown in FIG. 12, FIG. 13, and FIG. 15, a first convex rib 121 is arranged on a surface of the extension portion 12 facing the frame 20, and the surface of the extension portion 12 facing the frame 20 and the first convex rib 121 define a first adhesive accommodation area. Further, the first convex rib 121 and the extension portion 12 are integrally formed, or the first convex rib 121 and the extension portion 12 are configured as split components. For example: the first convex rib 121 and the extension portion 12 are integrally formed. The first convex rib 121 and the tray bottom plate 10 are integrally thermoformed by the same material. Such an arrangement can avoid adding additional spare components, reduce cost, and improve the assembly efficiency of the battery pack 200. When the sealing structure 13 is a structural adhesive, in a process of assembling the frame 20 and the tray bottom plate 10, the structural adhesive is applied to a surface of the frame 20 first, and then the bottom plate body 11 of the tray bottom plate 10 is mounted in the mounting space 21. The first convex rib 121 of the extension portion 12 is in contact with the structural adhesive and presses the structural adhesive, so that the structural adhesive flows into the first adhesive accommodation area. The first convex rib 121 presses the structural adhesive, so that the structural adhesive can be uniformly arranged between the extension portion 12 and the frame 20, a thickness of each area of the sealing structure 13 can be more uniform, and the avoidance through hole 122 can be better sealed. The battery core 201 can be placed smoothly after the battery core 201 is mounted in the placing slot 111.

In some embodiments of the present disclosure, as shown in FIG. 12, FIG. 13, and FIG. 15, the multiple avoidance through holes 122 are provided at intervals in a circumferential direction of the extension portion 12. Further, the multiple avoidance through holes 122 are sequentially provided at intervals in an extension direction of the extension portion 12. A first convex rib 121 is arranged between at least two adjacent avoidance through holes 122 of the multiple avoidance through holes 122. For example: a first convex rib 121 is arranged between any two adjacent avoidance through holes 122. Further, at least one first convex rib 121 is arranged between two adjacent avoidance through holes 122, and multiple first convex ribs121 press the structural adhesive at the same time, so that the structural adhesive can be more uniformly arranged between the extension portion 12 and the frame 20, and a thickness of each area of the sealing structure 13 can be more uniform. The battery core 201 can be better placed smoothly after the battery core 201 is mounted in the placing slot 111.

In some embodiments of the present disclosure, a boss protruding toward the frame 20 is arranged on a surface of the extension portion 12 facing the frame 20, and the surface of the extension portion 12 facing the frame 20 and the boss define a first adhesive accommodation area. Further, the boss and the extension portion 12 are integrally formed, or the boss and the extension portion 12 are configured as split components. For example: the boss and the extension portion 12 are integrally formed, the boss and the tray bottom plate 10 are integrally thermoformed by the same material, and the boss is arranged around the avoidance through hole 122. Further, multiple bosses are included. The multiple bosses are arranged in one-to-one correspondence with the multiple avoidance through holes 122. When the sealing structure 13 is a structural adhesive, in a process of assembling the frame 20 and the tray bottom plate 10, the structural adhesive is applied to a surface of the frame 20 first and then the bottom plate body 11 of the tray bottom plate 10 is mounted in the mounting space 21, the bosses of the extension portion 12 are in contact with the structural adhesive and press the structural adhesive first, so that the structural adhesive flows into the first adhesive accommodation area. The bosses press the structural adhesive, so that the structural adhesive can be uniformly arranged between the extension portion 12 and the frame 20, and a thickness of each area of the sealing structure 13 can be more uniform. The battery core 201 can be smoothly placed after the battery core 201 is mounted in the placing slot 111.

In some embodiments of the present disclosure, a height of the first convex rib 121 protruding from a surface of the extension portion 12 and a height of the boss protruding from the surface of the extension portion 12 are both H1, and satisfy a relational expression: 0.5mm≤H1≤1.5mm. Such an arrangement can ensure that an appropriate thickness of the sealing structure 13 after the extension portion 12 presses the structural adhesive.

In some embodiments of the present disclosure, as shown in FIG. 12, FIG. 13, and FIG. 15, a second convex rib 114 corresponding to the support portion 22 is arranged on a surface of the bottom plate body 11 facing the support portion 22, and the surface of the bottom plate body 11 facing the support portion 12 and the second convex rib 114 define a second adhesive accommodation area. The second convex rib 114 may support the support portion 22 after the frame 20 and the tray bottom plate 10 are assembled together. Further, multiple second convex ribs 114 are included. When the sealing structure 13 is a structural adhesive, in a process of assembling the frame 20 and the tray bottom plate 10, the structural adhesive is applied to a surface of the support portion 22 opposite to the bottom plate body 11, and then the bottom plate body 11 is mounted in the mounting space 21. The second convex ribs 114 are in contact with the structural adhesive first to press the structural adhesive, so that the structural adhesive flows into the second adhesive accommodation area. The second convex ribs 114 press the structural adhesive, so that the structural adhesive can be uniformly arranged between the support portion 22 and the bottom plate body 11, and a thickness of each area of the sealing structure 13 can be more uniform. The battery core 201 can be smoothly placed after the battery core 201 is mounted in the placing slot 111.

In some embodiments of the present disclosure, as shown in FIG. 15, an end portion of the second convex rib 114 close to the mounting space 21 extends out of the support portion 22 in a direction from the frame 20 to the mounting space 21. When the battery tray 100 is placed in a manner in FIG. 15, the side edge beam 23 located on a right side is taken as an example for describing. A left end portion of the second convex rib 114 extends out of a left end portion of the support portion 22. Since the side edge beam 23 is a main load bearing component, and consistency and stability of an adhesive layer in an entire area of the sealing structure 13 need to be strictly ensured, the end portion of the second convex rib 114 close to the mounting space 21 extends out of the support portion 22, which can ensure the consistency and stability of the adhesive layer in the entire area of the sealing structure 13.

In some embodiments of the present disclosure, as shown in FIG. 11, when the battery tray 100 is placed in a placing manner in FIG. 11, the orthographic projection of the support portion 22 and the orthographic projection of the pressed area 112 have a coincident area in the height direction of the battery tray 100. Such an arrangement can ensure that the support portion 22 supports the battery core 201, and can ensure that the frame 20 is mainly configured to bear the weight of the battery core 201 after the battery core 201 is placed in the placing slot 111.

In some embodiments of the present disclosure, the bottom wall 113 of the placing slot has the pressed area 112, which may alternatively be understood that the pressed area 112 is arranged on the bottom wall 113 of the placing slot, as shown in FIG. 11, when the battery tray 100 is placed in a placing manner in FIG. 11, the support portion 22 is located below the bottom plate body 11, and the support portion 22 supports the bottom wall 113 of the placing slot. Such an arrangement can ensure that the support portion 22 supports below the pressed area 112, can further ensure that the support portion 22 supports the battery core 201, and can further ensure that the frame 20 is mainly configured to bear the weight of the battery core 201. Thus, the pressed area 112 is provided at a proper position.

In some embodiments of the present disclosure, as shown in FIG. 8, the frame 20 further includes a support beam 26. The support beam 26 is connected between the two side edge beams 23, or the support beam 26 is connected between the front end beam 24 and the rear end beam 25, or the support beam 26 is connected between the front end beam 24 and the side edge beam 23, or the support beam 26 is connected between the rear end beam 25 and the side edge beam 23. Such an arrangement can improve a structural strength of the frame 20, thereby improving a structural strength of the battery tray 100.

In some embodiments of the present disclosure, as shown in FIG. 5 and FIG. 6, the battery tray 100 further includes an expansion beam 27. The expansion beam 27 is arranged on a side of the tray bottom plate 10 away from the frame 20. When the battery tray 100 is arranged in a manner in FIG. 5 and FIG. 6, the expansion beam 27 is arranged above the tray bottom plate 10, and the expansion beam 27 is mounted on the support beam 26 by bolts. The expansion beam 27 may limit the battery core 201 after the battery core 201 is mounted in the placing slot 111 and when the battery core 201 expands, thereby improving use safety of the battery core 201.

Further, multiple support beams 26 are arranged. The multiple support beams 26 are sequentially arranged at intervals along the length direction of the side edge beam 23. The length direction of the side edge beam 23 refers to the front-rear direction in FIG. 6. Multiple expansion beams 27 are arranged. The multiple expansion beams 27 are sequentially arranged at intervals along the length direction of the side edge beam 23. The multiple expansion beams 27 are arranged in one-to-one correspondence with the multiple support beams 26. One expansion beam 27 is mounted on one support beam 26 by bolts, thereby stably mounting the expansion beam 27 on the frame 20.

In some embodiments of the present disclosure, as shown in FIG. 5 to FIG. 7 and FIG. 11, when the battery tray 100 is placed in a placing manner in FIG. 11, the upper end of the placing slot 111 is open, the battery core 201 is placed in the placing slot 111 from the open end of the placing slot 111, thereby achieving a technical effect of placing the battery core 201 in the placing slot 111. Moreover, the extension portion 12 is provided in a manner of extending along the open end of the placing slot 111. As shown in FIG. 11, the extension portion 12 is connected to the upper end of the bottom plate body 11. The extension portion 12 can be provided outside the placing slot 111 through such an arrangement after the bottom plate body 11 is mounted in the mounting space 21, which can ensure that the extension portion 12 is provided corresponding to the frame 20 in the up-down direction of the battery tray 100, thereby ensuring sealing of the battery tray 100.

In some embodiments of the present disclosure, as shown in FIG. 8, FIG. 10, and FIG. 11, a surface of the support portion 22 close to the tray bottom plate 10 is configured as a plane, that is, as shown in FIG. 11, an upper surface of the support portion 22 is configured as a plane. Such an arrangement can ensure support area of the support portion 22 to the bottom plate body 11, so that the support portion 22 can better support the battery core 201.

In some embodiments of the present disclosure, the tray bottom plate 10 is bonded with the frame 20. Further, the tray bottom plate 10 is bonded with the frame 20 by applying an adhesive (for example, a structural adhesive) between the tray bottom plate 10 and the frame 20. A dimensional tolerance of the frame 20 is absorbed by controlling a thickness of the adhesive, the tray bottom plate 10 has good flatness, and manufacturing requirements for the tray bottom plate 10 and the frame 20 are reduced by using a characteristic that the adhesive can absorb a tolerance. Moreover, when the conventional tray bottom plate 10 and the frame 20 are welded, the tray bottom plate 10 is easily deformed in a welding process, which increases a dimension requirement for the battery core 201 in a subsequent assembly process of the battery pack 200, and affects assembly efficiency of the battery pack 200. Whereas in the present disclosure, the tray bottom plate 10 is bonded with the frame 20, and the tray bottom plate 10 is prevented from being connected to the frame 20 by welding, which can prevent the tray bottom plate 10 form deforming, reduces the dimension requirement for the battery core 201 in the subsequent assembly process of the battery pack 200, and improves the assembly efficiency of the battery pack 200.

In some embodiments of the present disclosure, the tray bottom plate 10 is configured as an integrally formed component. The tray bottom plate 10 is molded by a lightweight composite material. The tray bottom plate 10 achieves good air tightness after melting, flowing, and curing of resin during molding. Molding by a mold component can ensure that the tray bottom plate 10 has good flatness and dimensional accuracy, and ensure a sealing function of the tray bottom plate 10.

In some embodiments of the present disclosure, the frame 20 is configured as a metal component, the frame 20 may be made of an aluminum material, or the frame 20 may be made of a steel material, but the present disclosure is not limited thereto. The frame 20 may alternatively be made of other metal materials that achieve the same effect as the steel material. For example: the frame 20 is made of a steel material, the frame 20 may be formed by rolling a steel material, or the frame 20 may be formed by extruding a steel material. The frame 20 is configured as a metal component, which can improve the load bearing capability of the frame 20, and can reduce a risk of deformation of the frame 20. Moreover, the frame 20 made of the steel material can withstand a high temperature above 1500°C, which ensures the integrity of the frame 20 during thermal runaway of the battery core 201.

In some embodiments of the present disclosure, as shown in FIG. 11, the side edge beam 23 includes an edge beam body 231. The edge beam body 231 defines a cavity. A connecting plate 232 is arranged in the cavity. The connecting plate 232 is obliquely connected between a top wall 233 of the cavity and a bottom wall 234 of the cavity. The connecting plate 232 may divide the cavity into multiple sub-cavities 235. The multiple sub-cavities 235 are sequentially arranged in a width direction of the side edge beam 23. The width direction of the side edge beam 23 refers to a left-right direction in FIG. 11 when the battery tray 100 is placed in a manner in FIG. 11. Further, as shown in FIG. 11, the connecting plate 232 is arranged in a manner of extending obliquely in a direction away from the mounting space 21 in a direction from a top to a bottom of the battery tray 100. The connecting plate 232 divides the cavity into two sub-cavities 235. The two sub-cavities 235 are sequentially arranged in the width direction of the side edge beam 23. Such an arrangement can improve the structural strength of the side edge beam 23, and can improve the stability of the side edge beam 23, thereby improving a capability of the side edge beam 23 to support the battery core 201, and further reducing the risk of deformation of the frame 20.

Moreover, the multiple sub-cavities 235 are sequentially arranged in the width direction of the side edge beam 23. When the sub-cavity 235, of the multiple sub-cavities 235, away from the mounting space 21 of the battery tray 100 is impacted, for example: when the sub-cavity 235 located on a left side of FIG. 11 is impacted, the impacted sub-cavity 235 can absorb a collision force, which reduces the collision force transferred to an interior of the battery pack 200, and can reduce a risk of damage to the battery core 201 in the battery pack 200, thereby improving the use safety of the battery pack 200.

Further, as shown in FIG. 10 and FIG. 11, the first side wall 236 of the cavity away from the mounting space 21 is connected between the top wall 233 of the cavity and the bottom wall 234 of the cavity, and the first side wall 236 is connected to the connecting plate 232. Further, as shown in FIG. 11, a first connecting portion 238 extending toward an interior of the cavity is arranged at the lower end of the first side wall 236. The first connecting portion 238 is connected to both the bottom wall 234 of the cavity and the connecting plate 232. The first connecting portion 238 is connected to the bottom wall 234 of the cavity by welding. Such an arrangement can further improve the structural strength of the side edge beam 23, and can further improve the stability of the side edge beam 23.

Further, as shown in FIG. 10 and FIG. 11, the second side wall 237 of the cavity close to the mounting space 21 is connected between the top wall 233 of the cavity and the bottom wall 234 of the cavity, and the second side wall 237 is connected to the connecting plate 232. Further, as shown in FIG. 11, a second connecting portion 239 extending toward the interior of the cavity is arranged at the upper end of the second side wall 237, and the second connecting portion 239 being connected to both the top wall 233 of the cavity and the connecting plate 232. The second connecting portion 239 is connected to the top wall 233 of the cavity by welding. The top wall 233 of the cavity, the bottom wall 234 of the cavity, the first side wall 236, and the second side wall 237 together define the cavity. Such an arrangement can further improve the structural strength of the side edge beam 23, and can further improve the stability of the side edge beam 23.

Further, as shown in FIG. 10 and FIG. 11, the lower end of the second side wall 237 is connected to the support portion 22, and the support portion 22 is connected to the bottom wall 234 of the cavity. Further, in the width direction of the side edge beam 23, an end of the bottom wall 234 of the cavity close to the mounting space 21 extends below the support portion 22, and an end portion of the bottom wall 234 of the cavity close to the mounting space 21 is connected to an end portion of the support portion 22 close to the mounting space 21. Further, a boss structure 2391 protruding toward the support portion 22 is arranged at a structure of the bottom wall 234 of the cavity located below the support portion 22. The boss structure 2391 is connected to the support portion 22. Such an arrangement can further improve the structural strength of the side edge beam 23, and can further improve the stability of the side edge beam 23.

Further, multiple boss structures 2391 are provided at a structure of the bottom wall 234 of the cavity located below the support portion 22. The multiple boss structures 2391 are sequentially arranged in the width direction of the side edge beam 23. At least one of the multiple boss structures 2391 is located below the pressed area 112. By such an arrangement, the boss structure 2391 can support the battery core 201, the load bearing capacity of the frame 20 can be further improved, and the risk of deformation of the support portion 22 can be reduced.

A battery pack 200 according to the embodiments of the present disclosure is described below with reference to FIG. 1 to FIG. 16. The battery pack 200 includes a battery core 201, a battery tray 100, and a cover body 40.

The battery tray 100 includes: a tray bottom plate 10 and a frame 20. The frame 20 defines a mounting space 21. The tray bottom plate 10 is mounted in the mounting space 21. The cover body 40 and the tray bottom plate 10 are hermetically connected and together define a placing cavity 41 for placing a battery core 201. Further, the cover body 40 is connected to the frame 20. The cover body 40 and the tray bottom plate 10 may be sealed by a sealant. The cover body 40 and the tray bottom plate 10 may alternatively be sealed by a sealing gasket. A manner of sealing between the cover body 40 and the tray bottom plate 10 is not specifically limited as long as the cover body 40 and the tray bottom plate 10 can be sealed.

Since the cover body 40 and the tray bottom plate 10 are hermetically connected, which can together define the sealed placing cavity 41. The battery core 201 can be separated from the frame 20 by the tray bottom plate 10 after the battery core 201 is placed in the placing cavity 41, the battery core 201 is located in a completely sealed and insulated placing cavity 41, the battery core 201 is sealed in the placing cavity 41. The battery pack 200 does not have a risk of electric leakage, so that the use safety of the battery pack 200 is improved. Moreover, a welding seam of the frame 20 does not have an impact on the air tightness of the battery pack 200, and air tightness testing does not need to be performed on the battery tray 100, so that the production efficiency of the battery tray 100 is improved.

In some implementations of the present disclosure, the battery pack 200 further includes: a sealing member 203. The sealing member 203 is arranged between the tray bottom plate 10 and the cover body 40 to hermetically connect the cover body 40 and the tray bottom plate 10, thereby sealing the placing cavity 41. Further, the tray bottom plate 10 may be provided as a non-metal component. Further, the tray bottom plate 10 may be provided as an insulating component. The tray bottom plate 10 has functions of insulating and sealing. The battery pack 200 may be reliably sealed through the tray bottom plate 10, the cover body 40, and the sealing member 203.

Thus, by matching the battery tray 100, the cover body 40, and the sealing member 203, the battery core 201 can be separated from the frame 20 by the tray bottom plate 10 after the battery core 201 is placed in the placing cavity 41, and the battery core 201 is sealed in the placing cavity 41, and the battery pack 200 does not have a risk of electric leakage, so that the use safety of the battery pack 200 is improved. Moreover, a welding seam of the frame 20 does not have an impact on the air tightness of the battery pack 200, and air tightness testing does not need to be performed on the battery tray 100, so that the production efficiency of the battery tray 100 is improved.

In some embodiments of the present disclosure, as shown in FIG. 1, FIG. 3, and FIG. 7, a tray bottom plate 10 includes a bottom plate body 11. The bottom plate body 11 defines a placing slot 111 for placing a battery core 201 or a battery module. The present disclosure takes the placing slot 111 for placing the battery core 201 as an example for describing. The cover body 40 is arranged covering an open end of the placing slot 111 to define a placing cavity 41 for placing the battery core 201. By such an arrangement, the placing cavity 41 can be provided.

Further, the tray bottom plate 10 further includes an extension portion 12. The extension portion 12 is arranged extending along a circumferential edge of the bottom plate body 11. Further, the extension portion 12 is configured as a ring structure. Specifically, the extension portion 12 is configured as a closed ring structure. A sealing member 203 is arranged between the extension portion 12 and the cover body 40. Further, the cover body 40 is provided with a second assembly flange 42 extending along a circumferential edge of the cover body 40. The sealing member 203 is arranged between the extension portion 12 and the second assembly flange 42. The extension portion 12 is sandwiched between the second assembly flange 42 of the cover body 40 and the frame 20. Bolts pass through the second assembly flange 42, the sealing member 203, the extension portion 12, and the frame 20 to assemble the cover body 40, the sealing member 203, the tray bottom plate 10, and the frame 20 together. The sealing member 203 may seal the placing cavity 41. The battery core 201 can be completely separated from the frame 20 after the battery core 201 is placed in the placing cavity 41, and the battery core 201 is located in a completely insulated environment, which ensures that the battery pack 200 does not have a risk of electric leakage. It is to be noted that, the cover body 40 may be alternatively configured as a plate-like structure, and the sealing member 203 is arranged between an edge of the cover body 40 and the extension portion 12 to hermetically connect the cover body 40 and the tray bottom plate 10. The present disclosure takes the cover body 40 provided with the second assembly flange 42 as an example for describing.

A bottom wall 113 of the placing slot is provided with a pressed area 112 configured to support the battery core 201. The pressed area 112 refers to an area where an orthographic projection of the bottom wall 113 of the placing slot coincides with an orthographic projection of the battery core 201 in a height direction of the battery tray 100 when the battery core 201 is mounted in the placing slot 111, or may alternatively be understood as a contact area of the battery core 201 with the bottom wall 113 of the placing slot when the battery core 201 is mounted in the placing slot 111. The contact area includes an area where the battery core 201 is in direct or indirect contact with the bottom wall 113 of the placing slot. For example: the battery core 201 is in indirect contact with the bottom wall 113 of the placing slot when there is an adhesive or a cooling structure between the battery core 201 and the bottom wall 113 of the placing slot. The battery core 201 is in direct contact with the bottom wall 113 of the placing slot when there is no other obj ect between the battery core 201 and the bottom wall 113 of the placing slot. Alternatively, it may be understood that an area where the weight of the battery core 201 directly acts on the bottom wall of the bottom plate body 11 is the pressed area 112. In a height direction of the battery tray 100, the orthographic projection of the bottom wall 113 of the placing slot is a projection of the bottom wall 113 of the placing slot in a plane perpendicular to the height direction of the battery tray 100. In the height direction of the battery tray 100, the orthographic projection of battery core 201 is a projection of battery core 201 in a plane perpendicular to the height direction of the battery tray 100.

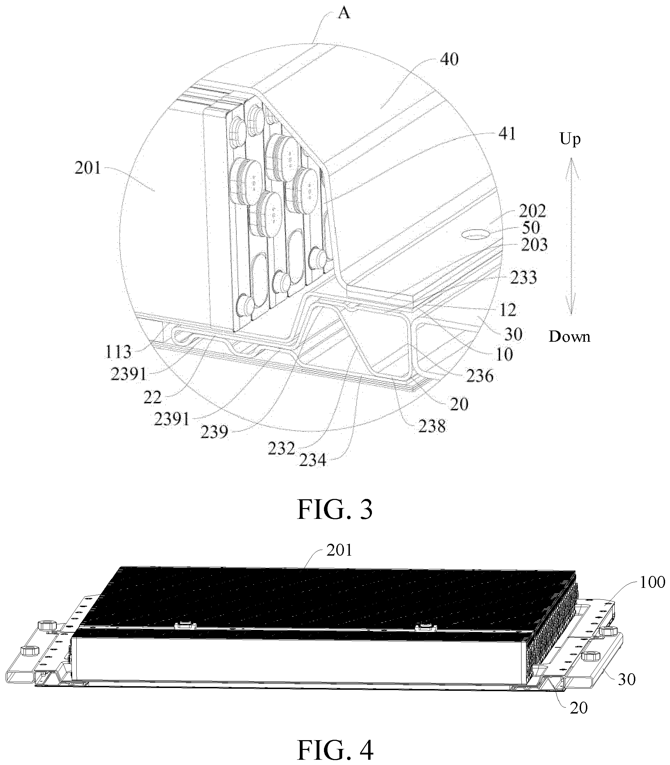

When the battery core 201 is mounted in the battery tray 100, the battery core 201 is located in the pressed area 112 of the placing slot 111, the bottom plate body 11 is mounted in the mounting space 21, and the extension portion 12 is located outside the mounting space 21 and is arranged on the frame 20. Further, as shown in FIG. 3, in the height direction of the battery pack 200, when the battery pack is placed in the direction in FIG. 3, the height direction of the battery pack 200 refers to the up-down direction in FIG. 3, both the extension portion 12 and the cover body 40 are located above the frame 20, and the extension portion 12 is arranged corresponding to the cover body 40. Further, both the extension portion 12 and the second assembly flange 42 are located above the frame 20, and the extension portion 12 is arranged corresponding (for example, directly opposite) to the second assembly flange 42. The extension portion 12 is provided outside the mounting space 21 after the bottom plate body 11 is mounted in the mounting space 21. The extension portion 12 is provided corresponding to the frame 20 in the up-down direction of the battery tray 100. Specifically, as shown in FIG. 11, the extension portion 12 is located above the frame 20. The extension portion 12 is arranged directly opposite to the frame 20. The extension portion 12 may shield an entire upper surface of the frame 20 in the up-down direction of the battery tray 100.

In some embodiments of the present disclosure, as shown in FIG. 1 and FIG. 3, the battery pack 200 may further include: a pressing plate 202. Further, the pressing plate 202 is connected to the frame 20 by a fastener. The extension portion 12, the sealing member 203, and the cover body 40 are sandwiched between the pressing plate 202 and the frame 20. Further, the extension portion 12, the sealing member 203, and the second assembly flange 42 are sandwiched between the pressing plate 202 and the frame 20. The fastener may be a bolt or a screw, for example: the fastener is a bolt, a rivet nut is arranged in the frame 20, the bolt passes through the pressing plate 202, the second assembly flange 42, the sealing member 203, the extension portion 12, and the frame 20, and the bolt is connected to the rivet nut to assemble the pressing plate 202, the cover body 40, the tray bottom plate 10, and the frame 20 together. The pressing plate 202 is arranged, and the entire sealing member 203 may be pressed uniformly by the pressing plate 202, which ensures reliable sealing of the placing cavity 41.

In some embodiments of the present disclosure, each of the extension portion 12, the sealing member 203, the second assembly flange 42, and the pressing plate 202 is configured as a ring structure. Further, each of the extension portion 12, the sealing member 203, the second assembly flange 42, and the pressing plate 202 is configured as a closed ring structure. After the pressing plate 202, the cover body 40, the tray bottom plate 10, and the frame 20 are assembled together, each of the extension portion 12, the sealing member 203, the second assembly flange 42, and the pressing plate 202 is configured as a closed ring structure, which can seal the placing cavity 41 in the circumferential direction of the placing cavity 41, and ensures the air tightness of the placing cavity 41. Thus, the extension portion 12, the sealing member 203, the second assembly flange 42, and the pressing plate 202 are provided in proper structures.

In some embodiments of the present disclosure, as shown in FIG. 1, FIG. 3, FIG. 7, and FIG. 8, each of the extension portion 12, the sealing member 203, the cover body 40, the pressing plate 202, and the frame 20 are provided with assembly holes 50 that match fasteners. Further, each of the extension portion 12, the sealing member 203, the second assembly flange 42, the pressing plate 202, and the frame 20 are provided with assembly holes 50 that match fasteners. The assembly holes 50 of the pressing plate 202, the assembly holes 50 of the second assembly flange 42, the assembly holes 50 of the sealing member 203, the assembly holes 50 of the extension portion 12, and the assembly holes 50 of the frame 20 are correspondingly provided. The fasteners pass through the assembly holes 50 of the pressing plate 202, the assembly holes 50 of the second assembly flange 42, the assembly holes 50 of the sealing member 203, the assembly holes 50 of the extension portion 12, and the assembly holes 50 of the frame 20 to connect rivet nuts. The assembly holes 50 are provided, which can achieve assembling of the pressing plate 202, the cover body 40, the tray bottom plate 10, and the frame 20.

In some embodiments of the present disclosure, the sealing member 203 is provided as a sealing ring, which has good air tightness. Such an arrangement can ensure the air tightness of the sealing member 203, and a gap between the extension portion 12 and the second assembly flange 42 may be better sealed, thereby improving the air tightness of the placing cavity 41.

In some embodiments of the present disclosure, the frame 20 has a support portion 22 extending toward an interior of the mounting space 21. The support portion 22 is configured to support the pressed area 112 of the tray bottom plate 10. As shown in FIG. 6, FIG. 8, and FIG. 11, the present disclosure takes the battery tray 100 placed in an up-down direction as an example for describing. As shown in FIG. 11, the battery core 201 is located in the pressed area 112 when the battery core 201 is mounted in the placing slot 111, the support portion 22 supports the pressed area 112, the weight of the battery core 201 is born on the frame 20, the frame 20 bears a most part of the weight of the battery core 201, and the tray bottom plate 10 does not bear the weight of the battery core 201 or bears a small part of the weight of the battery core 201 only, so that a load bearing requirement of the tray bottom plate 10 is greatly reduced, a thickness of the tray bottom plate 10 can be reduced, and the tray bottom plate 10 may be made of a material with a lower strength and a thinner thickness. Further, the tray bottom plate 10 is provided as a non-metal component. Further, the tray bottom plate 10 is provided as an insulating component. The tray bottom plate 10 may be made of a lightweight non-metal composite material. For example: the lightweight non-metal composite material may be made of resin and glass fiber. The resin may be epoxy resin or polyurethane, but the present disclosure is not limited thereto. The lightweight non-metal composite material may alternatively be made of other composite materials having the same functions as the resin and the glass fiber. Such an arrangement can reduce the weight of the tray bottom plate 10, and is conductive to lightweight designs of the battery tray 100 and the battery pack 200. Moreover, an existing tray bottom plate 10 is made of an aluminum material. According to the present disclosure, the tray bottom plate 10 is made of the non-metal composite material, which can reduce production cost of the tray bottom plate 10, and is conductive to reducing production cost of the battery tray 100 and the battery pack 200. It is to be noted that, the tray bottom plate 10 made of the non-metal composite material has excellent electrical insulation properties. The battery pack 200 does not suffer from high voltage risks such as arc discharge when the vehicle 2000 is subjected to a serious chassis collision accident. It may be understood that the height direction of the battery tray 100 may coincide with the height direction of a vehicle 2000 when the battery tray 100 is mounted on the vehicle 2000.

Further, the tray bottom plate 10 is configured as an integrally formed component. The tray bottom plate 10 is molded by a lightweight non-metal composite material. The tray bottom plate 10 achieves good air tightness after melting, flowing, and curing of resin during molding. Molding by a mold component can ensure that the tray bottom plate 10 has good flatness and dimensional accuracy, and ensure a sealing function of the tray bottom plate 10. The frame 20 may be formed by metal through butt-welding, only a strength of a welding structure and necessary flatness of a product need to be ensured after welding forming, butt-welding efficiency is high, and production efficiency of the battery tray 100 is improved, the tray bottom plate 10 is responsible for sealing and does not need to be subjected to welding seam grinding and air tightness testing, and there is no risk of sealing failure caused by welding. The tray bottom plate 10 may be molded by a composite material. Production efficiency of the tray bottom plate 10 is high, and mold accuracy is high, so that high flatness can be achieved, and a dimension requirement of the battery core 201 is reduced.

In addition, a conventional battery tray 100 does not distinguish two functions of load bearing and sealing in a product structure. Requirements on both load bearing and sealing of a whole body are taken into consideration when the battery tray 100 is manufactured, resulting in low manufacturing efficiency and low yield of the battery tray 100. While in the present disclosure, the two functions of load bearing and sealing are distinguished. The frame 20 is mainly responsible for load bearing, and the tray bottom plate 10 is mainly responsible for sealing of the battery tray 100, which improves the manufacturing efficiency and the yield of the battery tray 100.

Thus, by matching the tray bottom plate 10 and the frame 20, the frame 20 bears a most part of the weight of the battery core 201, the tray bottom plate 10 bears a small part of the weight of the battery core 201 only, and the tray bottom plate 10 is mainly responsible for sealing, so that a thickness of the tray bottom plate 10 can be reduced, and the tray bottom plate 10 may be made of a lightweight composite material, which is conductive to lightweight designs of the battery tray 100 and the battery pack 200 and to cost reduction. Moreover, there is no risk of sealing failure of the battery tray 100 caused by welding after the tray bottom plate 10 and the frame 20 are assembled together. Welding seam grinding and air tightness testing of the battery tray 100 do not need to be performed, so that the production efficiency of the battery tray 100 is improved.

In some embodiments of the present disclosure, as shown in FIG. 11, when the battery tray 100 is placed in a placing manner in FIG. 11, the orthographic projection of the support portion 22 and the orthographic projection of the pressed area 112 have a coincident area in the height direction of the battery tray 100. After the battery core 201 is placed in the placing slot 111, such an arrangement can ensure that the support portion 22 supports the battery core 201, and can ensure that the frame 20 is mainly configured to bear the weight of the battery core 201.

In some embodiments of the present disclosure, the bottom wall 113 of the placing slot is provided with the pressed area 112, which may alternatively be understood that the pressed area 112 is arranged on the bottom wall 113 of the placing slot, as shown in FIG. 11, when the battery tray 100 is placed in a placing manner in FIG. 11, the support portion 22 is located below the bottom plate body 11, and the support portion 22 supports the bottom wall 113 of the placing slot. Such an arrangement can ensure that the support portion 22 supports below the pressed area 112, can further ensure that the support portion 22 supports the battery core 201, and can further ensure that the frame 20 is mainly configured to bear the weight of the battery core 201. Thus, the pressed area 112 is arranged at a proper position.

In some embodiments of the present disclosure, as shown in FIG. 6 and FIG. 8, the frame 20 includes side edge beams 23, a front end beam 24, and a rear end beam 25. The side edge beams 23, the front end beam 24, and the rear end beam 25 are connected to form the mounting space 21. The side edge beams 23, the front end beam 24, and the rear end beam 25 may be directly connected or indirectly connected. For example: taking a connection between the side edge beam 23 and the front end beam 24 as an example for describing, the side edge beam 23 and the front end beam 24 may be directly connected, or the side edge beam 23 and the front end beam 24 may be indirectly connected through other beams. The side edge beam 23 has a support portion 22. Two side edge beams 23 are arranged, and one rear end beam 25 and one the front end beam 24 are arranged. The two side edge beams 23 are spaced away in the left-right direction in FIG. 8 when the frame 20 is placed in a placing manner in FIG. 8, and both the front end beam 24 and the rear end beam 25 are connected between the two side edge beams 23. The front end beam 24 and the rear end beam 25 are spaced away in the front-rear direction of the frame 20, so that the front end beam 24, the rear end beam 25, and the two side edge beams 23 together define the mounting space 21. Moreover, when the battery core 201 is placed in a manner of extending along the left-right direction in FIG. 8, the support portion 22 is arranged at the side edge beam 23, which can ensure that each battery core 201 is supported by the support portion 22, can further ensure that the support portion 22 supports the battery core 201, and can further ensure that the frame 20 is mainly configured to bear the weight of the battery core 201. Thus, the support portion 22 is arranged at a proper position. It may be understood that the width direction of the battery tray 100 may coincide with a width direction of a vehicle, and the length direction of the battery tray 100 may coincide with a length direction of the vehicle when the battery tray 100 is mounted on the vehicle 2000. Certainly, the width direction of the battery tray 100 may coincide with the length direction of the vehicle, and the length direction of the battery tray 100 may coincide with the width direction of the vehicle.

In some embodiments of the present disclosure, as shown in FIG. 8, the frame 20 further includes a support beam 26. The support beam 26 is connected between the two side edge beams 23, or the support beam 26 is connected between the front end beam 24 and the rear end beam 25, or the support beam 26 is connected between the front end beam 24 and the side edge beam 23, or the support beam 26 is connected between the rear end beam 25 and the side edge beam 23. Such an arrangement can improve a structural strength of the frame 20, thereby improving a structural strength of the battery tray 100.

In some embodiments of the present disclosure, as shown in FIG. 5 and FIG. 6, the battery tray 100 further includes an expansion beam 27. The expansion beam 27 is arranged on a side of the tray bottom plate 10 away from the frame 20. When the battery tray 100 is arranged in a manner in FIG. 5 and FIG. 6, the expansion beam 27 is arranged above the tray bottom plate 10, and the expansion beam 27 is mounted on the support beam 26 by bolts. The expansion beam 27 may limit the battery core 201 after the battery core 201 is mounted in the placing slot 111 and when the battery core 201 expands, thereby improving use safety of the battery core 201.

Further, multiple support beams 26 are arranged. The multiple support beams 26 may be sequentially arranged at intervals along the length direction of the side edge beam 23. The length direction of the side edge beam 23 refers to the front-rear direction in FIG. 6. The multiple support beams 26 may alternatively be sequentially arranged at intervals along the width direction of the battery tray 100. The width direction of the battery tray 100 refers to the left-right direction in FIG. 6. The present disclosure takes the multiple support beams 26 sequentially arranged at intervals along the length direction of the side edge beam 23 as an example for describing. Multiple expansion beams 27 are arranged. The multiple expansion beams 27 are sequentially arranged at intervals along the length direction of the side edge beam 23. The multiple expansion beams 27 are arranged in one-to-one correspondence with the multiple support beams 26. One expansion beam 27 is mounted on one support beam 26 by bolts, thereby stably mounting the expansion beam 27 on the frame 20.

In some embodiments of the present disclosure, as shown in FIG. 11, the support portion 22 is arranged close to the lower end of the side edge beam 23. It may alternatively be understood that the support portion 22 is arranged close to an end portion of the side edge beam 23 away from the tray bottom plate 10. After the bottom plate body 11 is mounted in the mounting space 21, the support portion 22 is arranged close to the end portion of the side edge beam 23 away from the tray bottom plate 10, which can ensure that the support portion 22 supports below the bottom plate body 11, and can ensure that the bottom plate body 11 is mounted in the mounting space 21.

In some embodiments of the present disclosure, as shown in FIG. 5 to FIG. 7 and FIG. 11, when the battery tray 100 is placed in a manner in FIG. 11, the upper end of the placing slot 111 is open, and the battery core 201 may be placed in the placing slot 111 from an open end of the placing slot 111. Moreover, the extension portion 12 is arranged extending along the open end of the placing slot 111. As shown in FIG. 11, the extension portion 12 is connected to the upper end of the bottom plate body 11. The extension portion 12 can be arranged outside the placing slot 111 through such an arrangement after the bottom plate body 11 is mounted in the mounting space 21, which can ensure that the extension portion 12 is arranged corresponding to the frame 20 in the up-down direction of the battery tray 100, thereby ensuring sealing of the battery tray 100.

In some embodiments of the present disclosure, as shown in FIG. 8, FIG. 10, and FIG. 11, a surface of the support portion 22 close to the tray bottom plate 10 is configured as a plane, that is, as shown in FIG. 11, an upper surface of the support portion 22 is configured as a plane. Such an arrangement can ensure support area of the support portion 22 to the bottom plate body 11, so that the support portion 22 can better support the battery core 201.

In some embodiments of the present disclosure, the support portion 22 is located below the bottom plate body 11 and is fixedly connected to the bottom plate body 11. Further, the tray bottom plate 10 is bonded with the frame 20. Further, the tray bottom plate 10 is bonded with the frame 20 by applying an adhesive (for example, a structural adhesive) between the tray bottom plate 10 and the frame 20. A dimensional tolerance of the frame 20 is absorbed by controlling a thickness of the adhesive, the tray bottom plate 10 has good flatness, and manufacturing requirements for the tray bottom plate 10 and the frame 20 are reduced by using a characteristic that the adhesive can absorb a tolerance. Moreover, when the conventional tray bottom plate 10 and the frame 20 are welded, the tray bottom plate 10 is easily deformed in a welding process, which increases a dimension requirement for the battery core 201 in a subsequent assembly process of the battery pack 200, and affects assembly efficiency of the battery pack 200. Whereas in the present disclosure, the tray bottom plate 10 is bonded with the frame 20, and the tray bottom plate 10 is prevented from being connected to the frame 20 by welding, which can prevent the tray bottom plate 10 form deforming, reduces the dimension requirement for the battery core 201 in the subsequent assembly process of the battery pack 200, and improves the assembly efficiency of the battery pack 200.

In some embodiments of the present disclosure, the tray bottom plate 10 is configured as an integrally formed component. The tray bottom plate 10 is molded by a lightweight composite material. The tray bottom plate 10 achieves good air tightness after melting, flowing, and curing of resin during molding. Molding by a mold component can ensure that the tray bottom plate 10 has good flatness and dimensional accuracy, and ensure a sealing function of the tray bottom plate 10.

In some embodiments of the present disclosure, the frame 20 is configured as a metal component, the frame 20 may be made of an aluminum material, or the frame 20 may be made of a steel material, but the present disclosure is not limited thereto. The frame 20 may alternatively be made of other metal materials that achieve the same effect as the steel material. For example: the frame 20 is made of a steel material, the frame 20 may be formed by rolling a steel material, or the frame 20 may be formed by extruding a steel material. The frame 20 is configured as a metal component, which can improve the load bearing capability of the frame 20, and can reduce a risk of deformation of the frame 20. Moreover, the frame 20 made of the steel material can withstand a high temperatures above 1500°C, which ensures the integrity of the frame 20 during thermal runaway of the battery core 201.

In some embodiments of the present disclosure, as shown in FIG. 11, the side edge beam 23 includes an edge beam body 231. The edge beam body 231 defines a cavity. A connecting plate 232 is arranged in the cavity. The connecting plate 232 is obliquely connected between a top wall 233 of the cavity and a bottom wall 234 of the cavity. The connecting plate 232 may divide the cavity into multiple sub-cavities 235. The multiple sub-cavities 235 are sequentially provided in a width direction of the side edge beam 23. The width direction of the side edge beam 23 refers to a left-right direction in FIG. 11 when the battery tray 100 is placed in a manner in FIG. 11. Further, as shown in FIG. 11, the connecting plate 232 is arranged in a manner of extending obliquely in a direction away from the placing slot 111 in a direction from a top to a bottom of the battery tray 100. The connecting plate 232 divides the cavity into two sub-cavities 235. The two sub-cavities 235 are sequentially arranged in the width direction of the side edge beam 23. Such an arrangement can improve the structural strength of the side edge beam 23, and can improve the stability of the side edge beam 23, thereby improving a capability of the side edge beam 23 to support the battery core 201, and further reducing the risk of deformation of the frame 20.

Moreover, the multiple sub-cavities 235 are sequentially provided in the width direction of the side edge beam 23. When the sub-cavity 235, of the multiple sub-cavities 235, away from the mounting space 21 (or the placing slot 111) of the battery tray 100 is impacted, for example: when the sub-cavity 235 located on a left side of FIG. 11 is impacted, the impacted sub-cavity 235 can absorb a collision force, which reduces the collision force transferred to an interior of the battery pack 200, and can reduce a risk of damage to the battery core 201 in the battery pack 200, thereby improving the use safety of the battery pack 200.

Further, as shown in FIG. 10 and FIG. 11, the first side wall 236 of the cavity away from the mounting space 21 (or the placing slot 111) is connected between the top wall 233 of the cavity and the bottom wall 234 of the cavity, and the first side wall 236 is connected to the connecting plate 232. Further, as shown in FIG. 11, a first connecting portion 238 extending toward the interior of the cavity is arranged at the lower end of the first side wall 236. The first connecting portion 238 is located on one side of the bottom wall 234 of the cavity toward the top wall 233 of the cavity. The first side wall 236 is connected to each of the bottom wall 234 of the cavity and the connecting plate 232 through the first connecting portion 238. The first connecting portion 238 is connected to the bottom wall 234 of the cavity by welding. Such an arrangement can further improve the structural strength of the side edge beam 23, and can further improve the stability of the side edge beam 23.

Further, as shown in FIG. 10 and FIG. 11, the second side wall 237 of the cavity close to the mounting space 21 (or the placing slot 111) is connected between the top wall 233 of the cavity and the bottom wall 234 of the cavity, and the second side wall 237 is connected to the connecting plate 232. Further, as shown in FIG. 11, a second connecting portion 239 extending toward the interior of the cavity is arranged at the upper end of the second side wall 237 has, the second connecting portion 239 is located on one side of the top wall 233 of the cavity toward the bottom wall 234 of the cavity, and the second side wall 237 is connected to both the top wall 233 of the cavity and the connecting plate 232 through the second connecting portion 239. The second connecting portion 239 is connected to the top wall 233 of the cavity by welding. The top wall 233 of the cavity, the bottom wall 234 of the cavity, the first side wall 236, and the second side wall 237 together define the cavity. Such an arrangement can further improve the structural strength of the side edge beam 23, and can further improve the stability of the side edge beam 23.

Further, as shown in FIG. 10 and FIG. 11, the lower end of the second side wall 237 is connected to the support portion 22, and the support portion 22 is connected to the bottom wall 234 of the cavity. Further, in the width direction of the side edge beam 23, the bottom wall 234 of the cavity has a structural reinforcement portion 2341 extending below the support portion 22, and the structural reinforcement portion 2341 is connected to the end portion of the support portion 22 close to the tray bottom plate 10. It may alternatively be understood that the structural reinforcement portion 2341 extends below the support portion 22, and the structural reinforcement portion 2341 is connected to the end portion of the support portion 22 close to the mounting space 21. Further, the structural reinforcement portion 2341 is provided with a boss structure 2391 protruding toward the support portion 22, and the boss structure 2391 is connected to the support portion 22. Such an arrangement can further improve the structural strength of the side edge beam 23, and can further improve the stability of the side edge beam 23.

In some embodiments, the height direction of the side edge beam 23 coincides with the height direction of the battery tray 100, and the width direction of the side edge beam 23 may coincide with the width direction or the length direction of the battery tray 100. When the battery tray 100 is mounted to the vehicle 2000, the height direction of the side edge beam 23 may coincide with the height direction of the vehicle 2000, and the width direction of the side edge beam 23 may coincide with the length direction or the width direction. Further, multiple boss structures 2391 are arranged on the structural reinforcement portion 2341. The multiple boss structures 2391 are sequentially arranged in the width direction of the side edge beam 23. At least one of the multiple boss structures 2391 is located below the pressed area 112. By such an arrangement, the boss structure 2391 can support the battery core 201, the load bearing capacity of the frame 20 can be further improved, and the risk of deformation of the support portion 22 can be reduced.

A tray bottom plate 10 according to the embodiments of the present disclosure is described below with reference to the accompanying drawings.

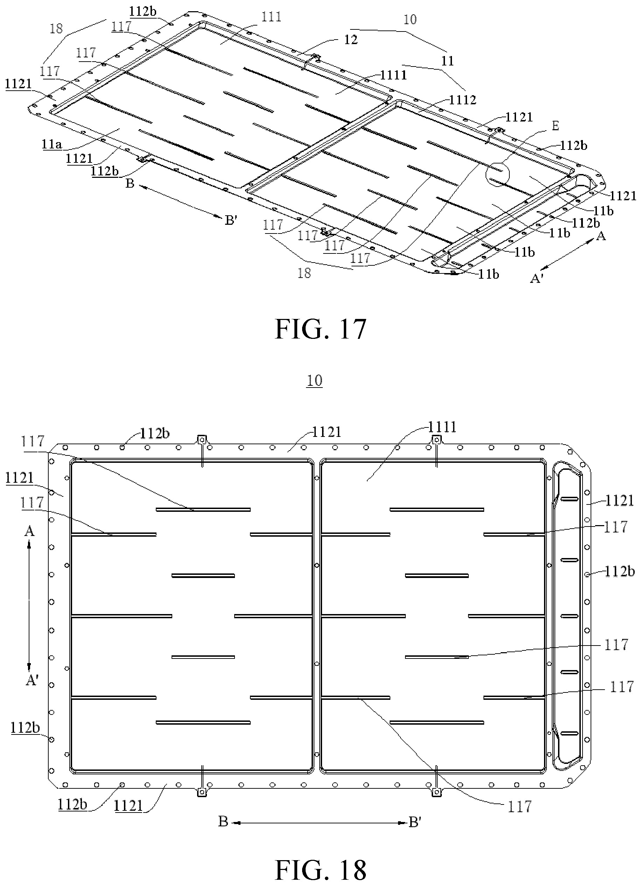

As shown in FIG. 17 and FIG. 18, the tray bottom plate 10 includes a bottom plate body 11. The bottom plate body 11 defines a placing slot 111. The placing slot 111 is configured to accommodate a battery core 201. A bottom surface of the placing slot 111 is adapted to be bonded with the battery core 201 through a first adhesive part to ensure that the battery core 201 is stably arranged in the placing slot 111.

The tray bottom plate 10 further includes a first support protrusion 117, the first support protrusion 117 is arranged on the bottom surface of the placing slot 111, and the first support protrusion 117 is arranged protruding from the bottom surface of the placing slot 111. The first support protrusion 117 and the bottom surface of the placing slot 111 together define a third adhesive accommodation area 11a. A side wall of the first support protrusion 117 participates in defining a side wall of the third adhesive accommodation area 11a. The third adhesive accommodation area 11a is configured to accommodate the first adhesive part. The first support protrusion 117 is configured to support the battery core 201.

It can be seen that, when the tray bottom plate 10 is configured for the battery pack 200, the first support protrusion 117 may support a bottom of the battery core 201, the first support protrusion 117 is arranged between the battery core 201 and the bottom surface of the placing slot 111, the first adhesive part is also arranged between the battery core 201 and the bottom surface of the placing slot 111, and the bottom of the battery core 201 is fixedly connected to the bottom surface of the placing slot 111 through the first adhesive part. The first adhesive part is arranged at an edge of the first support protrusion 117. A surface of the first adhesive part bonded with the battery core 201 and a surface of the first support protrusion 117 that supports the battery core 201 may be basically located in the same plane, so that a thickness of the first adhesive part coincides with a height of the first support protrusion 117, and the first support protrusion 117 can limit the thickness of the first adhesive part. Therefore, the thickness of the first adhesive part may be adjusted by adjusting the height of the first support protrusion 117, which ensures a bonding strength of the first adhesive part, and then ensures that the tray bottom plate 10 is reliably bonded with the battery core 201.

The first support protrusion 117 and the bottom plate body 11 are of an integrated part. In a process of assembling the tray bottom plate 10 and the battery core 201, an adhesive limiting strip does not need to be pre-bonded with the bottom surface of the placing slot 111 by a person, additional components do not need to be added, and the cost is reduced. Meanwhile, a possible problem of bonding by mistake when the adhesive limiting strip is manually bonded at a later stage is avoided, a manual operation process of the first support protrusion 117 is omitted, the machining efficiency of the tray bottom plate 10 is improved, an assembly process of the tray bottom plate 10 and the battery core 201 is simplified, the assembly efficiency of the tray bottom plate 10 and the battery core 201 is improved, and a connection strength between the first support protrusion 117 and the bottom plate body 11 is ensured.

According to the tray bottom plate 10 of the embodiments of the present disclosure, the first support protrusion 117 is arranged on the bottom surface of the placing slot 111, the first support protrusion 117 protrudes from the bottom surface of the placing slot 111, the first support protrusion 117 and the bottom surface of the placing slot 111 together define the third adhesive accommodation area 11a. The third adhesive accommodation area 11a is configured to accommodate the first adhesive part, the first support protrusion 117 and the bottom plate body 11 are of an integrated part, and the first support protrusion 117 does not need to be manually and separately arranged, which improves the machining efficiency of the tray bottom plate 10, simplifies an assembly process of the tray bottom plate 10 and the battery core 201, and improves the assembling efficiency of the tray bottom plate 10 and the battery core 201.

It may be understood that a cross-sectional shape of the first support protrusion 117 may be specifically set according to actual needs.

Optionally, the first support protrusion 117 and the bottom plate body 11 are of a thermoformed integrated part. The first support protrusion 117 and the bottom plate body 11 are made of the same material.

In some embodiments, as shown in FIG. 17 and FIG. 18, multiple first support protrusions 117 arranged at intervals along the first direction (for example, direction AA' in FIG. 17) form a protrusion group 18. Multiple protrusion groups 18 are included. The multiple protrusion groups 18 are arranged at intervals along a second direction (for example, direction BB' in FIG. 17). The first direction is perpendicular to the second direction, and the multiple first support protrusions 117 on the bottom surface of the placing slot 111 may be substantially arranged in multiple rows and multiple columns along the second direction and the first direction, which simplifies an arrangement of the multiple first support protrusions 117, and facilitates machining of the first support protrusions 117. Adhesive accommodating sub-grooves 11b may be respectively defined between any two adjacent first support protrusions 117 in each of the protrusion groups 18 and between the first support protrusion 117 adjacent to an edge of the bottom plate body 11 in each of the protrusion groups 18 and the edge of the bottom plate body 11. The adhesive accommodating sub-groove 11b accommodates a part of the first adhesive part, and each of the protrusion groups 18 may correspond to multiple adhesive accommodating sub-grooves 11b. Any two adjacent adhesive accommodating sub-grooves 11b communicate with each other, so that the structural adhesive in any one of the adhesive accommodating sub-grooves 11b can directly or indirectly flow into any other adhesive accommodating sub-grooves 11b, which reduces a requirement on an adhesive applying position, that is, the structural adhesive may be applied into any one of the adhesive accommodating sub-grooves 11b. The third adhesive accommodation area 11a corresponding to an entire bottom surface of the placing slot 111 may be filled with the structural adhesive through fluidity of the structural adhesive. Similarly, in a process of disassembling the battery core 201, an adhesive remover may be applied to a selected adhesive accommodating sub-groove 11b. The entire first adhesive part may be dissolved through the fluidity of the adhesive remover, thereby smoothly disassembling the battery core 201 from the tray bottom plate 10. It is to be noted that, one of the first direction and the second direction may be the length direction of the battery tray 100, and the other may be the width direction of the battery tray 100.

When the tray bottom plate 10 is configured for the battery pack 200, multiple battery cores 201 are included, and the multiple battery cores 201 are arranged at intervals along the second direction. An adhesive remover may be poured into a gap between two adjacent battery cores 201 during dissembling the battery cores 201, that is, the adhesive remover is poured from a terminal direction of the battery core 201, so that an adhesive can be better removed.

It may be understood that the multiple first support protrusions 117 of the protrusion groups 18 may be arranged at equal or not equal intervals, and quantities of the first support protrusions 117 of the multiple protrusion groups 18 may be equal or not equal. For example, in an example in FIG. 17, at least one of the protrusion groups 18 includes three first support protrusions 117, and at least one of the protrusion groups 18 includes four first support protrusions 117.

In some embodiments, as shown in FIG. 17 and FIG. 18, the projections of the first support protrusions 117 in the two adjacent protrusion groups 18 partially coincide along the first direction, that is, a part of a projection of at least one first support protrusion 117 in one of the two adjacent protrusion groups 18 in the first direction coincides with a part of a projection of at least one first support protrusion 117 in the other protrusion group 18 along the first direction, which facilitates continuous extension of the projections of the multiple protrusion groups 18 along the first direction, and is conductive to increasing, for a single battery core 201, the quantity of the first support protrusions 117 that support the single battery core 201 and improving the mounting stability of the battery core 201. Meanwhile, since the projections of the first support protrusions 117 in the two adjacent protrusion groups 18 partially coincide along the first direction, at least one first support protrusion 117 in one of the projection groups 18 is spaced away from at least one first support protrusion 117 in the other projection group 18 along the first direction, which increases communicated cross-sectional area between adhesive accommodating sub-grooves 11b corresponding to two adjacent protrusion groups 18, thereby improving the connectivity between the adhesive accommodating sub-grooves 11b corresponding to the two adjacent protrusion groups 18, facilitating quickly filling the third adhesive accommodation area 11a with the structural adhesive, and quickly dissolving the first adhesive part by the adhesive remover.

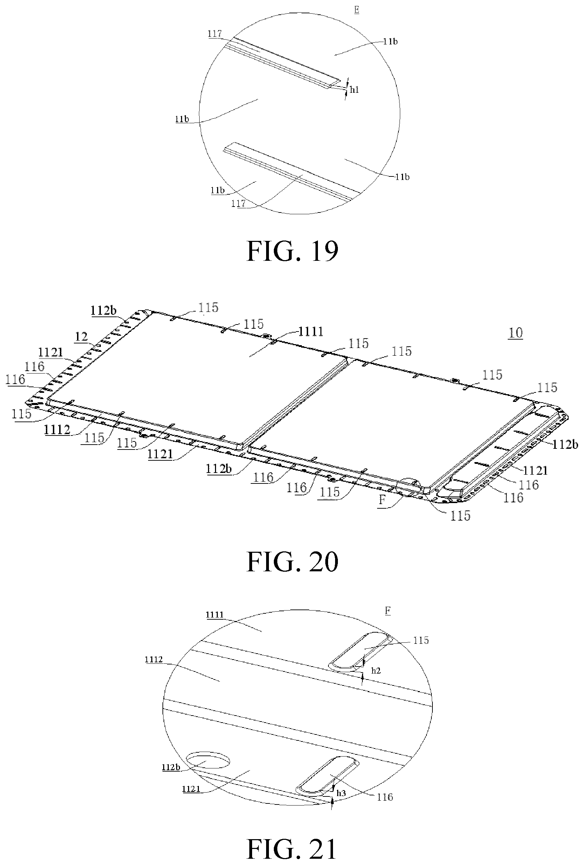

In some embodiments, as shown in FIG. 19, the first support protrusion 117 is defined with a height h1, that is, a distance between a top surface of the first support protrusion 117 and a bottom surface of the placing slot 111 is h1, or a distance between a side surface of the first support protrusion 117 facing away from the bottom surface of the placing slot 111 and the bottom surface of the placing slot 111 is h1, and 0.5mm≤h1≤1.5mm, which facilitates ensuring that the third adhesive accommodation area 11a has a sufficient adhesive accommodating space, thereby ensuring the bonding strength of the first adhesive part, and facilitating machining of the first support protrusion 117.

In some embodiments, the tray bottom plate 10 is an insulating material part, so that the tray bottom plate 10 has good electrical insulation. Even if a cooling liquid of the battery pack 200 leaks or the like, a risk of high voltage arc discharge between the tray bottom plate 10 and the battery core 201 can be avoided, so as to ensure normal use of the battery pack 200. Moreover, the tray bottom plate 10 is an integrally formed component, which reduces connecting processes among various portions of the tray bottom plate 10, and is conductive to improving the machining efficiency of the tray bottom plate 10. A connecting structure does not need to be machined on each portion of the tray bottom plate 10, which is conductive to simplifying a structure of the tray bottom plate 10 and reducing cost, and facilitates ensuring connecting strength between various portions of the tray bottom plate 10, so as to ensure the strength of the entire structure of the tray bottom plate 10.

It may be understood that, when the tray bottom plate 10 is an integrally formed component, a machining manner of the tray bottom plate 10 may be specifically set according to actual needs. For example, the tray bottom plate 10 may be formed as an integrally molded part through molding.

Optionally, the tray bottom plate 10 is a composite material part, which facilitates ensuring a structural strength of the tray bottom plate 10 while ensuring the electrical insulation of the tray bottom plate 10, so that the tray bottom plate 10 stably bears the battery core 201.

In some embodiments, as shown in FIG. 17, and FIG. 20 to FIG. 22, the bottom plate body 11 includes a bottom plate 1111 and side plates 1112. The side plates 1112 are arranged around the bottom plate 1111, and the side plates 1112 and the bottom plate 1111 together define the placing slot 111. The side plates 1112 may be substantially formed in a ring structure. The bottom plate 1111 and the side plates 1112 may separately limit the battery core 201, which facilitates stable mounting of the battery core 201.

It can be seen that, a top surface of the bottom plate 1111 is formed as the bottom surface of the placing slot 111, and a second support protrusion 115 is arranged on the bottom surface of the bottom plate 1111. The second support protrusion 115 and the second convex rib 114 in the embodiments described above are the same structural parts. The first support protrusion 117 and the second support protrusion 115 are respectively arranged on surfaces of both sides of a thickness of the bottom plate 1111, so that the first support protrusion 117 and the second support protrusion 115 are located on different sides of the thickness of the bottom plate 1111. The bottom surface of the bottom plate 1111 is adapted to be bonded with the frame 20 through a second adhesive part, so as to ensure that the bottom plate 1111 is firmly fixed to the frame 20. The second support protrusion 115 and the bottom surface of the bottom plate 1111 together define a fourth adhesive accommodation area, and a side wall of the second support protrusion 115 participates in defining a side wall of the fourth adhesive accommodation area. The fourth adhesive accommodation area is configured to accommodate the second adhesive part. The second support protrusion 115 is in abutting fit with the frame 20.

For example, when the tray bottom plate 10 is configured for the battery tray 100, the second support protrusion 115 may overlap on a top surface of the frame 20. The second support protrusion 115 is arranged between the bottom surface of the bottom plate 1111 and the frame 20. The second adhesive part is also arranged between the bottom plate of the bottom plate 1111 and the frame 20. The bottom surface of the bottom plate 1111 is fixedly connected to the frame 20 through the second adhesive part. A surface of the second adhesive part bonded with the frame 20 and a surface of the second support protrusion 115 that supports the frame 20 may be basically located in the same plane, so that a thickness of the second adhesive part coincides with a height of the second support protrusion 115, and the second support protrusion 115 can limit the thickness of the second adhesive part. Therefore, the thickness of the second adhesive part may be adjusted by adjusting the height of the second support protrusion 115, which ensures a bonding strength of the second adhesive part, and then ensures that the bottom plate 1111 is reliably bonded with the frame 20.

Optionally, in examples of FIG. 20 to FIG. 22, the second support protrusion 115 and the bottom plate 1111 are of an integrated part, which further improves the machining efficiency of the tray bottom plate 10, simplifies an assembly process of the tray bottom plate 10 and the frame 20, and improves the assembly efficiency of the tray bottom plate 10 and the frame 20. For example, the second support protrusion 115 and the bottom plate 1111 are of a thermoformed integrated part. The second support protrusion 115 and the bottom plate 1111 are made of the same material.

As shown in FIG. 20 to FIG. 24, the bottom plate body 11 further includes an extension portion 12. The extension portion 12 is arranged at an edge of the side plate 1112, the extension portion 12 is arranged around the side plate 1112, and then the extension portion 12 may be substantially formed as a ring structure. A third support protrusion 116 is arranged on a bottom surface of the extension portion 12. The third support protrusion 116 and the first convex rib 121 in the embodiments described above are the same structural parts. The bottom surface of the extension portion 12 is adapted to be bonded with the frame 20 through a third adhesive part, so as to ensure that the extension portion 12 is firmly fixed to the frame 20. The third support protrusion 116 and the bottom surface of the extension portion 12 together define a fifth adhesive accommodation area, and a side wall of the third support protrusion 116 participates in defining a side wall of the fifth adhesive accommodation area. The fifth adhesive accommodation area is configured to accommodate the third adhesive part. The third support protrusion 116 is in abutting fit with the frame 20.

For example, when the tray bottom plate 10 is configured for the battery tray 100, the third support protrusion 116 may overlap with the frame 20. The third support protrusion 116 is arranged between the bottom surface of the extension portion 12 and the frame 20. The third adhesive part is also arranged between the bottom surface of the extension portion 12 and the frame 20. The bottom surface of the extension portion 12 is fixedly connected to the frame 20 through the third adhesive part. A surface of the third adhesive part bonded with the frame 20 and a surface of the third support protrusion 116 that supports the frame 20 may be basically located in the same plane, so that a thickness of the third adhesive part coincides with a height of the third support protrusion 116, and the third support protrusion 116 can limit the thickness of the third adhesive part. Therefore, the thickness of the third adhesive part may be adjusted by adjusting the height of the third support protrusion 116, which ensures a bonding strength of the third adhesive part, and then ensures that the extension portion 12 is reliably bonded with the frame 20.

Optionally, the third support protrusion 116 and the extension portion 12 are of an integrated part, which further improves the machining efficiency of the tray bottom plate 10, simplifies an assembly process of the tray bottom plate 10 and the frame 20, and improves the assembly efficiency of the tray bottom plate 10 and the frame 20. For example, the third support protrusion 116 and the extension portion 12 are of a thermoformed integrated part. The third support protrusion 116 and the extension portion 12 are made of the same material.

In some embodiments, as shown in FIG. 20 to FIG. 24, multiple second support protrusions 115 are included. The multiple second support protrusions 115 are respectively arranged at edges of both sides of the bottom plate 1111 in the first direction, and then at least one second support protrusion 115 is arranged at the edge of each side of the bottom plate 1111 in the first direction. The frame 20 supports the edges of both sides of the bottom plate 1111 in the first direction, which effectively ensures that the frame 20 stably bears the battery core 201, is conductive to reducing a load bearing requirement of the bottom plate body 11, and is conductive to simplifying a structure of the frame 20.

In some embodiments, as shown in FIG. 17, FIG. 20, and FIG. 22, the extension portion 12 is provided with multiple avoidance through holes 112b. The avoidance through holes 112b and the avoidance through holes 122 in the embodiments described above are the same parts. The multiple avoidance through holes 112b are provided at intervals along a periphery of the bottom plate body 11, the multiple avoidance through holes 112b are provided around the bottom plate body 11, and at least one third support protrusion 116 is arranged between any two adjacent avoidance through holes 112b, so as to facilitate ensuring effective limitation of the third support protrusion 116 on the thickness of the third adhesive part, thereby improving the thickness uniformity of the third adhesive part, and ensuring the balance of the bonding strength of the third adhesive part.

One or more third support protrusions 116 are arranged between two adjacent avoidance through holes 112b. For the extension portion 12, the quantity of the third support protrusions 116 between two adjacent avoidance through holes 112b is equal or not equal to the quantity of the third support protrusions 116 between any other two adjacent avoidance through holes 112b. For example, in an example in FIG. 20, one third support protrusion 116 is arranged between any two adjacent avoidance through holes 112b.

It may be understood that when the tray bottom plate 10 is applied to the battery tray 100, the tray bottom plate 10 is fixedly connected to the frame 20, and the frame 20 is connected to the upper cover of the battery pack 200 through a fastener, so as to protect the battery core 201. For example, a top cover is arranged on a top side of the tray bottom plate 10, and the fastener is configured to fixedly connect the top cover and the frame 20. The fastener passes through the avoidance through hole 112b, and the avoidance through hole 112b may well avoid the fastener.

In an example in FIG. 17, the extension portion 12 includes multiple extension segments 1121. The multiple extension segments 1121 are sequentially connected end to end, so that the extension portion 12 forms a polygonal ring. Multiple avoidance through holes 112b are formed in each extension segment 1121. Multiple through holes 120 in each extension segment 1121 may be provided at intervals along a length direction of the extension segment 1121.

In some embodiments, as shown in FIG. 20 to FIG. 22, the at least one third support protrusion 116 extends in a strip shape along a width direction of the extension portion 12, and a length of the third support protrusion 116 is greater than a diameter of the avoidance through hole 112b, so that the third support protrusion 116 completely separates two adjacent avoidance through holes 112b to better limit the thickness of the third adhesive part.

In some embodiments, as shown in FIG. 20 to FIG. 22, the at least one third support protrusion 116 extends in a strip shape along the width direction of the extension portion 12, the length of the third support protrusion 116 is greater than or equal to half the width of the extension portion 12, and the length of the third support protrusion 116 is less than the width of the extension portion 12, which facilitates improving an effect of the third support protrusion 116 on limiting the entire thickness of the third adhesive part.

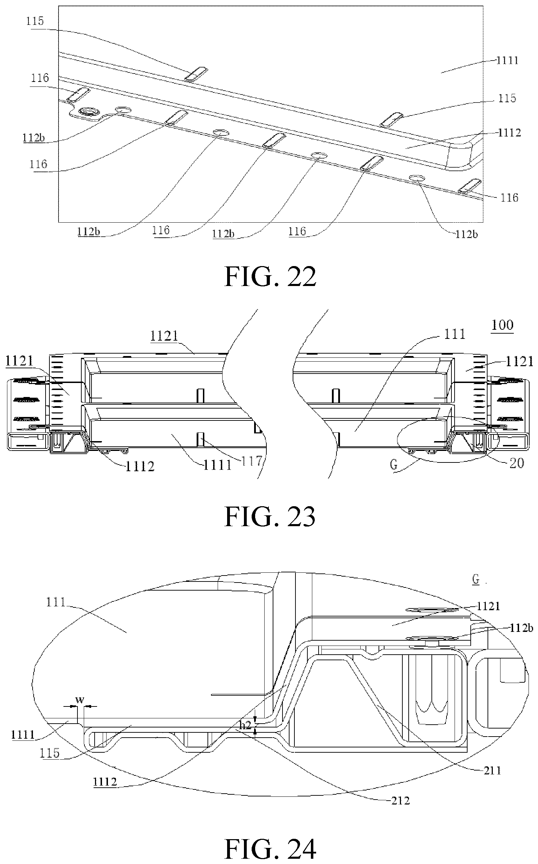

In some embodiments, as shown in FIG. 21 and FIG. 24, the second support protrusion 115 is defined with a height h2, that is, a distance between a bottom surface of the second support protrusion 115 and a bottom surface of the bottom plate 1111 is h2, or a distance between a surface of one side of the second support protrusion 13 facing away from the bottom surface of the bottom plate 1111 and the bottom surface of the bottom plate 1111 is h2, and 0.5mm≤h2≤1.5mm, which facilitates ensuring that the fourth adhesive accommodation area has a sufficient adhesive accommodating space, thereby ensuring the bonding strength of the second adhesive part, and facilitating machining of the second support protrusion 115.

In some embodiments, as shown in FIG. 21, the third support protrusion 116 is defined with a h3, that is, a distance between a bottom surface of the third support protrusion 116 and a bottom surface of the extension portion 12 is h3, or a distance between a surface of one side of the third support protrusion 116 facing away from the bottom surface of the extension portion 12 and the bottom surface of the extension portion 12 is h3, and 0.5mm≤h3≤1.5mm, which facilitates ensuring that the fifth adhesive accommodation area has a sufficient adhesive accommodating space, thereby ensuring the bonding strength of the third adhesive part, and facilitating machining of the third support protrusion 116.

In some embodiments, the second support protrusion 115 is defined with a height h2, the third support protrusion 116 is defined with a height h3, 0.5mm≤h2≤1.5mm, and 0.5mm≤h3≤1.5mm.

It is to be noted that, in the description of the present disclosure, the meaning of "and/or" is to include three parallel solutions, taking "A and/or B" as an example, including solution A, solution B, and a solution that both A and B satisfy.

A battery tray 100 according to an embodiment of a second aspect of the present disclosure, as shown in FIG. 23 and FIG. 24, includes a tray bottom plate 10 and a frame 20. The tray bottom plate 10 is the tray bottom plate 10 according to an embodiment of a first aspect of the present disclosure described above. The frame 20 is arranged around the tray bottom plate 10, and the frame 20 is fixedly connected to the tray bottom plate 10.

The battery tray 100 according to the embodiments of the present disclosure is conductive to improving the machining efficiency of the battery tray 100 by using the tray bottom plate 10 described above.

For example, in examples in FIG. 23 and FIG. 24, the frame 20 supports a bottom of the tray bottom plate 10, and the frame 20 is located outside a placing slot 111, so that the frame 20 indirectly and stably bears the battery core 201.

In some embodiments, as shown in FIG. 24, the bottom plate body 11 includes a bottom plate 1111 and side plates 1112. The side plates 1112 are arranged around the bottom plate 1111. The side plates 1112 and the bottom plate 1111 together define a placing slot 111. A second support protrusion 115 is arranged on a bottom surface of the bottom plate 1111. The bottom surface of the bottom plate 1111 is bonded with the frame 20 by a second adhesive part. The second support protrusion 115 and the bottom surface of the bottom plate 1111 together define a fourth adhesive accommodation area. The fourth adhesive accommodation area accommodates the second adhesive part. The second support protrusion 115 is in abutting fit with the frame 20. The second support protrusion 115 extends toward a center of the placing slot 111 to at least be flush with an edge of an inner end of the frame 20, that is, w≥0, so as to ensure consistency of the thickness of the entire second adhesive part, thereby ensuring the bonding strength of the second adhesive part, ensuring that the bottom plate 1111 is reliably bonded with the frame 20. Therefore, a portion of the frame 20 that supports the bottom plate 1111 may serve as a main load bearing portion for the battery core 201.

In some embodiments, the side plate 1112 is bonded with the frame 20 through a fourth adhesive part, so as to further ensure that the tray bottom plate 10 is firmly connected to the frame 20.

In some embodiments, as shown in FIG. 23 and FIG. 24, the bottom plate body 11 further includes an extension portion 12. The extension portion 12 is arranged at an edge of the side plate 1112, and the extension portion 12 is arranged around the side plate 1112. The frame 20 is arranged around the side plate 1112, the frame 20 may be substantially formed in a ring structure, and the frame 20 is fixedly connected to the extension portion 12, which facilitates ensuring sufficient connecting area between the frame 20 and the bottom plate body 11, thereby ensuring that the frame 201 is reliably connected to the bottom plate body 11.

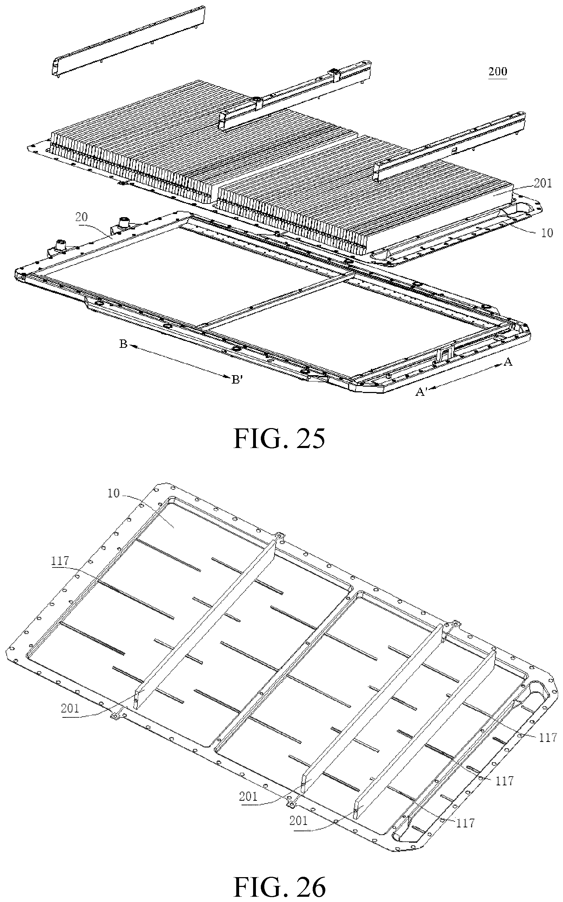

It is to be noted that, in the description of the present disclosure, "ring" is to be understood in a broad sense, that is, is not limited to "circular ring", for example, may alternatively be "polygonal ring" and the like. For example, in examples in FIG. 23 and FIG. 25, each of the frame 20, the side plate 1112, and the extension portion 12 is substantially formed as a polygonal ring. The frame 20 includes multiple edge beams sequentially connected end to end. The edge beam is fixed to a corresponding edge of the extension portion 12 (for example, a corresponding extension segment 1121 described in the present disclosure).

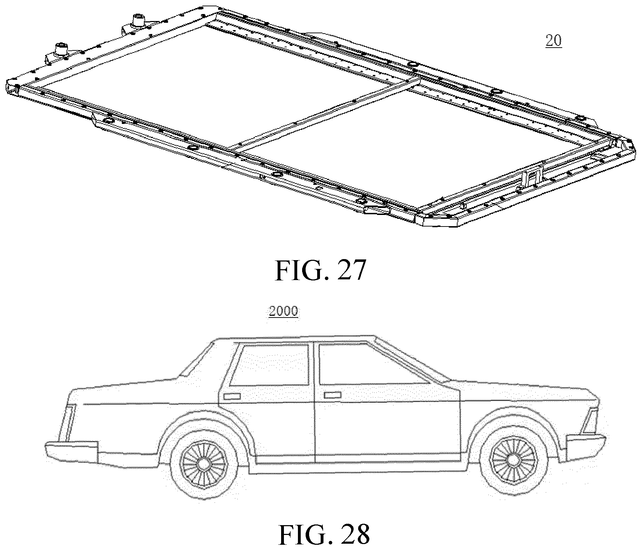

In some embodiments, as shown in FIG. 24 and FIG. 27, the edge beam includes a first beam body 211 and a second beam body 212. The first beam body 211 and the edge beam body 231 in the embodiment described above are the same parts. The second beam body 212 and the support portion 22 in the embodiment described above are the same parts. The first beam body 211 is fixedly connected to the extension portion 12. The second beam body 212 is arranged on an inner side of the first beam body 211, and the second beam body 212 is fixedly connected to the bottom plate 1111.

For example, the first beam body 211 is bonded with the bottom surface of the extension portion 12 through the third adhesive part, and neither of the extension portion 12 nor the first beam body 211 needs to be provided with a connecting hole, which simplifies machining processes of the first beam body 211 and the extension portion 12. Thereby, large bonding area between the edge beam and the bottom plate body 11 is ensured, and the connection strength between the frame 20 and the bottom plate body 11 is effectively ensured.

For example, the second beam body 212 is bonded with the bottom surface of the bottom plate 1111 by the second adhesive part. The second beam body 212 is in abutting fit with the second support protrusion 115, and the second beam body 212 may indirectly bear the battery core 201, so as to effectively ensure that the battery core 201 is reliably mounted, and reduce a bearing requirement of the bottom plate body 11, which is conductive to reducing an arrangement requirement of the bottom plate body 11, and reducing the cost of the battery tray 100.

Optionally, the first beam body 211 and the second beam body 212 are configured as an integrally formed component when the edge beam includes the first beam body 211 and the second beam body 212.

It may be understood that, in the present disclosure, the structures of the multiple edge beams may be the same or different. For example, when the structures of the multiple edge beams are the same, each edge beam includes a first beam body 211 and a second beam body 212. For another example, when the structures of the multiple edge beams are different, at least one edge beam includes a first beam body 211 and a second beam body 212, and at least one edge beam includes the first beam body 211, but does not include the second beam body 212.

A battery pack 200 according to an embodiment of a third aspect of the present disclosure includes a battery core 201 and a battery tray 100. The battery tray 100 is the battery tray 100 according to the embodiment of the second aspect described above of the present disclosure. A placing slot 111 accommodates the battery core 201. A bottom surface of the placing slot 111 is bonded with the battery core 201.

The battery pack 200 according to the embodiments of the present disclosure can improve the assembly efficiency of the battery pack 200 by using the battery tray 100 described above.

In some embodiments, as shown in FIG. 25 to FIG. 27, multiple battery cores 201 are included. The multiple battery cores 201 are sequentially arranged along a second direction. A length of each battery core 201 extends along a first direction. At least three first support protrusions 117 support the bottom of each battery core 201. The at least three first support protrusions 117 described above may be arranged at intervals along the first direction. The first direction is perpendicular to the second direction to ensure that the battery cores 201 are arranged smoothly, and the thickness of the first adhesive part between the battery core 201 and a bottom surface of the placing slot 111 is more uniform, thereby ensuring that the battery cores 201 are mounted firmly.

In some embodiments, as shown in FIG. 25, two first support protrusions 117, of the multiple first support protrusions 117 configured to support the same battery core 201, located at both ends in the first direction are at an equidistant distance from corresponding ends of the battery core 201, which is conductive to further improving placing stability of the battery core 201. Therefore, the multiple first support protrusions 117 stably support the battery core 201.

For example, taking an example in which the first direction is a front-rear direction for describing, multiple first support protrusions 117 corresponding to one battery core 201 are arranged at intervals along the front-rear direction. A distance between a front-most first support protrusion 117 of the multiple first support protrusions 117 and a front end of the battery core 201 is L1, a distance between a rear-most first support protrusion 117 and a rear end of the battery core 201 is L2, and L2=L1.

For example, the battery pack 200 further includes an expansion beam 27. The expansion beam 27 passes through a hole in the bottom plate body 11 to fasten the frame 20 by a bolt at a high strength grade (above grade 10.9).

As shown in FIG. 1 to FIG. 11, the battery pack 200 according to the embodiments of the present disclosure includes a battery core 201, a battery tray 100, and a cover body 40. The battery tray 100 is the battery tray 100 in the embodiments described above. The cover body 40 and the tray bottom plate 10 together define a placing cavity 41 for placing the battery core 201, and the cover body 40 is connected to the frame 20. Further, the cover body 40 is arranged covering an open end of the placing slot 111 to define the placing cavity 41. An extension portion 12 is sandwiched between the cover body 40 and the frame 20, and bolts pass through the cover body 40, the extension portion 12, and the frame 20 to assemble the cover body 40, the tray bottom plate 10, and the frame 20 together. Further, a sealing member 203 (for example, a sealing ring) is sandwiched between the extension portion 12 and the cover body 40. The sealing member 203 may seal the placing cavity 41. The cover body 40 and the tray bottom plate 10 define a sealed insulated cavity (that is, the placing cavity 41). The battery core 201 can be completely separated from the frame 20 after the battery core 201 is placed in the placing cavity 41. The battery core 201 is in a completely insulated environment, which ensures that the battery pack 200 does not have a risk of electric leakage.

In some embodiments of the present disclosure, as shown in FIG. 1, the battery pack 200 further includes: a pressing plate 202. The pressing plate 202 is configured as a closed ring structure. The cover body 40, the sealing member 203, and the extension portion 12 are sandwiched between the pressing plate 202 and the frame 20. Bolts pass through the pressing plate 202, the cover body 40, the extension portion 12, and the frame 20 to assemble the pressing plate 202, the cover body 40, the tray bottom plate 10, and the frame 20 together. The entire sealing member 203 may be uniformly pressed by the pressing plate 202, which ensures that the placing cavity 41 is sealed reliably.

A vehicle 2000 according to an embodiment of the present disclosure includes the battery pack 200 according to the embodiments described above. The battery pack 200 is mounted on the vehicle 2000 to provide power for the vehicle 2000. A frame 20 of the battery pack 200 bears a most part of the weight of the battery core 201, the tray bottom plate 10 bears a small part of the weight of the battery core 201 only, the tray bottom plate 10 is mainly responsible for sealing, the tray bottom plate 10 may be made of a lightweight composite material, which is conductive to lightweight designs of the battery tray 100, the battery pack 200, and the vehicle 2000, and to cost reduction. Moreover, there is no risk of sealing failure of the battery tray 100 caused by welding after the tray bottom plate 10 and the frame 20 are assembled together. Welding seam grinding and air tightness testing of the battery tray 100 do not need to be performed, so that the production efficiency of the battery tray 100 and the vehicle 2000 is improved. Meanwhile, the tray bottom plate 10 made of a composite material has excellent electrical insulation properties. The battery pack 200 does not suffer from high voltage risks such as arc discharge when the vehicle 2000 is subjected to a serious chassis collision accident, thereby improving the safety of the vehicle 2000.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, exemplary descriptions of the terms described above do not necessarily refer to the same embodiment or example. In addition, described specific features, structures, materials, or characteristics may be combined in a proper manner in any one or more of the embodiments or examples.

Although the embodiments of the present disclosure have been shown and described, those of ordinary skill in the art may understand that: A variety of changes, modifications, substitutions, and variants can be made to these embodiments without departing from a principle and a purpose of the present disclosure, and the scope of the present disclosure is defined by the claims and their equivalents.

## Claims

1. A battery tray (100), comprising:
a tray bottom plate (10), the tray bottom plate (10) comprising a bottom plate body (11), the bottom plate body (11) defining a placing slot (111) configured to place a battery core (201), and a bottom wall (113) of the placing slot (111) having a pressed area (112) configured to support the battery core (201); and
a frame (20), the bottom plate body (11) being mounted at the frame (20), the frame (20) having a support portion (22), the support portion (22) being configured to support the bottom plate body (11), and an orthographic projection of the support portion (22) and an orthographic projection of the pressed area (112) having a coincident area in a height direction of the battery tray (100).

2. The battery tray (100) according to claim 1, wherein the tray bottom plate (10) further comprises an extension portion (12) extending along an outer periphery of the bottom plate body (11); and the extension portion (12) is located above the frame (20) and is arranged at the frame (20) in the height direction of the battery tray (100).

3. The battery tray (100) according to claim 1 or 2, wherein the frame (20) comprises a first edge beam, a second edge beam, a third edge beam, and a fourth edge beam; the first edge beam and the second edge beam are oppositely arranged along a first direction; the third edge beam and the fourth edge beam are oppositely arranged along a second direction; the first edge beam, the second edge beam, the third edge beam, and the fourth edge beam are connected to form a mounting space (21); the bottom plate body (11) is mounted in the mounting space (21); the first edge beam and/or the second edge beam is provided with the support portion (22); and one of the first direction and the second direction is a length direction of the battery tray (100), and the other is a width direction of the battery tray (100).

4. The battery tray (100) according to claim 3, wherein the support portion (22) of the first edge beam is arranged close to a lower end of the first edge beam, and/or the support portion (22) of the second edge beam is arranged close to a lower end of the second edge beam.

5. The battery tray (100) according to claim 2, wherein an upper end of the placing slot (111) is open, and the extension portion (12) is arranged extending along a circumferential direction of an open end of the placing slot (111).

6. The battery tray (100) according to any one of claims 1 to 5, wherein a surface of the support portion (22) close to the tray bottom plate (10) is configured as a plane.

7. The battery tray (100) according to any one of claims 1 to 6, wherein the support portion (22) is located below the bottom plate body (11) and is fixedly connected to the bottom plate body (11).

8. The battery tray (100) according to any one of claims 1 to 7, wherein the tray bottom plate (10) is configured as an integrally formed component.

9. The battery tray (100) according to claim 3, wherein at least one of the first edge beam or the second edge beam comprises an edge beam body (231) connected to the corresponding support portion (22); the edge beam body (231) defines a cavity; a connecting plate (232) is arranged in the cavity; and the connecting plate (232) is obliquely connected between a top wall (233) and a bottom wall (234) of the cavity to divide the cavity into a plurality of sub-cavities (235).

10. The battery tray (100) according to claim 9, wherein a first side wall (236) of the cavity away from the mounting space (21) is connected between the top wall (233) and the bottom wall (234) of the cavity, and the first side wall (236) is connected to the connecting plate (232); and
a second side wall (237) of the cavity close to the mounting space (21) is connected between the top wall (233) and the bottom wall (234) of the cavity, and the second side wall (237) is connected to the connecting plate (232).

11. The battery tray (100) according to claim 10, wherein a lower end of the first side wall (236) is connected to a first connecting portion (238) extending toward an interior of the cavity; the first side wall (236) is connected to the bottom wall (234) of the cavity and the connecting plate (232) through the first connecting portion (238); the first connecting portion (238) is fixedly connected to the bottom wall (234) of the cavity;
an upper end of the second side wall (237) is connected to a second connecting portion (239) extending toward the interior of the cavity; the second side wall (237) is connected to the top wall (233) of the cavity and the connecting plate (232) through the second connecting portion (239); the second connecting portion (239) is fixedly connected to the top wall (233) of the cavity; and
the top wall (233) of the cavity, the bottom wall (234) of the cavity, the first side wall (236), and the second side wall (237) together define the cavity.

12. The battery tray (100) according to claim 10, wherein a lower end of the second side wall (237) is connected to the support portion (22); and the second side wall (237) is connected to the bottom wall (234) of the cavity through the support portion (22).

13. The battery tray (100) according to any one of claims 1 to 12, wherein the frame (20) is a metal component; and the tray bottom plate (10) is an insulating component.

14. The battery tray (100) according to claim 2, further comprising a sealing structure (13), the frame (20) defining a mounting space (21), the bottom plate body (11) being mounted in the mounting space (21), the extension portion (12) being located outside the mounting space (21), the extension portion (12) being provided with an avoidance through hole (122) for a fastener to pass through, and the sealing structure (13) being configured to seal the avoidance through hole (122).

15. The battery tray (100) according to claim 14, wherein the sealing structure (13) is arranged between the extension portion (12) and the frame (20) and corresponds to the avoidance through hole (122); and/or the sealing structure (13) is arranged in the avoidance through hole (122) to seal the avoidance through hole (122).

16. The battery tray (100) according to claim 14, wherein the extension portion (12) is hermetically connected to the frame (20) through the sealing structure (13).

17. The battery tray (100) according to any one of claims 14 to 16, wherein a plurality of the sealing structures (13) are comprised, and the plurality of sealing structures (13) are sequentially spaced away.

18. The battery tray (100) according to any one of claims 14 to 17, wherein the support portion (22) extends toward an interior of the mounting space (21); and the sealing structure (13) is arranged between the support portion (22) and the bottom plate body (11).

19. The battery tray (100) according to any one of claims 14 to 18, wherein the frame (20) comprises a side edge beam (23), a front end beam (24), and a rear end beam (25); the side edge beam (23), the front end beam (24), and the rear end beam (25) are connected to form the mounting space (21); and the side edge beam (23) and/or the front end beam (24) and/or the rear end beam (25) is provided with the support portion (22).

20. The battery tray (100) according to claim 19, wherein the support portion (22) is arranged close to a lower end of the side edge beam (23).

21. The battery tray (100) according to any one of claims 14 to 20, wherein a first convex rib (121) is arranged on a surface of the extension portion (12) facing the frame (20); and the surface of the extension portion (12) facing the frame (20) and the first convex rib (121) define a first adhesive accommodation area.

22. The battery tray (100) according to claim 21, wherein the extension portion (12) is provided with a plurality of the avoidance through holes (122); the plurality of the avoidance through holes (122) are spaced away in a circumferential direction of the extension portion (12); and the first convex rib (121) is arranged between at least two adjacent avoidance through holes (122) of the plurality of avoidance through holes (122).

23. The battery tray (100) according to claim 14, wherein a boss protruding toward the frame (20) is arranged on a surface of the extension portion (12) facing the frame (20) ; the surface of the extension portion (12) facing the frame (20) and the boss define the first adhesive accommodation area; and the boss is arranged around the avoidance through hole (122).

24. The battery tray (100) according to claim 14, wherein a second convex rib (114) corresponding to the support portion (22) is arranged on a surface of the bottom plate body (11) facing the support portion (22) ; the surface of the bottom plate body (11) facing the support portion (22) and the second convex rib (114) define a second adhesive accommodation area; and the second convex rib (114) abuts against the support portion (22).

25. The battery tray (100) according to claim 24, wherein an end portion of the second convex rib (114) close to the mounting space (21) extends out of the support portion (22) in a direction from the frame (20) to the mounting space (21).

26. The battery tray (100) according to any one of claims 1 to 25, wherein the bottom wall (113) of the placing slot (111) is adapted to be bonded with the battery core (201) through a first adhesive part; the tray bottom plate (10) further comprises a first support protrusion (117); the first support protrusion (117) is arranged on the bottom wall (113) of the placing slot (111) and protrudes from the bottom wall (113) of the placing slot (111); the first support protrusion (117) and the bottom wall (113) of the placing slot (111) together define a third adhesive accommodation area (11a); the third adhesive accommodation area (11a) is configured to accommodate the first adhesive part; the first support protrusion (117) is configured to support the battery core (201); and the first support protrusion (117) and the bottom plate body (11) are of an integrated part.

27. The battery tray (100) according to claim 26, wherein a plurality of the first support protrusions (117) arranged at intervals along the first direction form a protrusion group (18); a plurality of the protrusion groups (18) are comprised; the plurality of the protrusion groups (18) are arranged at intervals along the second direction; and the second direction is perpendicular to the first direction.

28. The battery tray (100) according to claim 27, wherein projections of the first support protrusions (117) of two adjacent protrusion groups (18) partially coincide along the first direction.

29. The battery tray (100) according to any one of claims 26 to 28, wherein the first support protrusion (117) is defined with a height h1, and 0.5mm≤h1≤1.5mm.

30. The battery tray (100) according to any one of claims 26 to 29, wherein the bottom plate body (11) comprises a bottom plate (1111) and a side plate (1112); the side plate (1112) is arranged around the bottom plate (1111), and the side plate (1112) and the bottom plate (1111) together define the placing slot (111); a second support protrusion (115) is arranged on a bottom surface of the bottom plate (1111); the bottom surface of the bottom plate (1111) is adapted to be bonded with the frame (20) through a second adhesive part; the second support protrusion (115) and the bottom surface of the bottom plate (1111) together define a fourth adhesive accommodation area; the fourth adhesive accommodation area is configured to accommodate the second adhesive part; the second support protrusion (115) is in abutting fit with the frame (20);
the extension portion (12) of the tray bottom plate (10) is arranged at an edge of the side plate (1112) and is arranged around the side plate (1112); a third support protrusion (116) is arranged on a bottom surface of the extension portion (12); the bottom surface of the extension portion (12) is adapted to be bonded with the frame (20) through a third adhesive part; the third support protrusion (116) and the bottom surface of the extension portion (12) together define a fifth adhesive accommodation area; the fifth adhesive accommodation area is configured to accommodate the third adhesive part; and the third support protrusion (116) is in abutting fit with the frame (20).

31. The battery tray (100) according to claim 30, wherein a plurality of the second support protrusions (115) are comprised; and the plurality of the second support protrusions (115) are separately arranged at edges of both sides of the bottom plate (1111) in the first direction.

32. The battery tray (100) according to claim 30, wherein a plurality of avoidance through holes (112b) are provided in the extension portion (12); the plurality of avoidance through holes (112b) are provided at intervals along a periphery of the bottom plate body (11); and at least one of the third support protrusions (116) is arranged between any two adjacent avoidance through holes (112b).

33. The battery tray (100) according to claim 30, wherein the second support protrusion (115) is defined with a height h2, and 0.5mm≤h2≤1.5mm; and/or the third support protrusion (116) is defined with a height h3, and 0.5mm≤h3≤1.5mm.

34. The battery tray (100) according to claim 30, wherein the second support protrusion (115) extends toward a center of the placing slot (111) to at least be flush with an edge of an inner end of the frame (20).

35. A battery pack (200), comprising:
a battery core (201);
a battery tray (100), the battery tray (100) being the battery tray (100) according to any one of claims 1 to 34; and
a cover body (40), the cover body (40) and a tray bottom plate (10) together defining a placing cavity (41) for placing the battery core (201), and the cover body (40) being connected to a frame (20).

36. The battery pack (200) according to claim 35, wherein the tray bottom plate (10) is mounted in a mounting space (21) of the battery tray (100); and the cover body (40) is hermetically connected to the tray bottom plate (10).

37. The battery pack (200) according to claim 36, further comprising a sealing member (203), the sealing member (203) being arranged between the tray bottom plate (10) and the cover body (40).

38. The battery pack (200) according to claim 35, wherein the cover body (40) is arranged covering an open end of the placing slot (111) to define the placing cavity (41).

39. The battery pack (200) according to claim 37, wherein the sealing member (203) is arranged between an extension portion (12) of the tray bottom plate (10) and the cover body (40).

40. The battery pack (200) according to claim 39, wherein both the extension portion (12) and the cover body (40) are located above the frame (20) in a height direction of the battery pack (200); and the extension portion (12) is arranged corresponding to the cover body (40).

41. The battery pack (200) according to claim 39, further comprising a pressing plate (202), and the extension portion (12), the sealing member (203), and the cover body (40) being sandwiched between the pressing plate (202) and the frame (20).

42. The battery pack (200) according to claim 41, wherein each of the extension portion (12), the sealing member (203), and the pressing plate (202) is configured as a ring structure.

43. The battery pack (200) according to claim 41, wherein the pressing plate (202) is connected to the frame (20) through a fastener.

44. The battery pack (200) according to claim 43, wherein each of the extension portion (12), the sealing member (203), the cover body (40), the pressing plate (202), and the frame (20) has an assembly hole (50) that matches the fastener.

45. A vehicle (2000), comprising the battery pack (200) according to any one of claims 35 to 44.
